# EUROPEAN PATENT APPLICATION

(11) **EP 4 492 307 A1**
(43) Date of publication of application: **15.01.2025**
(21) Application number: 24186933.8
(22) Date of filing: 05.07.2024
(51) Int. Cl.: G06Q 10/0631, G06N 20/00, G06Q 10/087

(54) **SYSTEMS AND METHODS FOR SUPPLY CHAIN MANAGEMENT INCLUDING ERP AGNOSTIC REALTIME DATA MESH WITH CHANGE DATA CAPTURE**

(30) Priority: 10.07.2023 US 202318349836
(71) Applicant: Ingram Micro Inc., Irvine, CA 92612 (US)
(72) Inventor: SAHOO, Sanjib, Naperville, IL 60564 (US); GOPALAN, Mukund, Irvine, CA 92612 (US)
(74) Representative: Zoebisch, Michael

(57) **Abstract**

System and methods are provided for dynamically consolidating interaction points in a distribution ecosystem. The method involves integrating multiple touchpoints of communication between distributors, resellers, end-users, vendors, and suppliers into a unified interactive interface. This interface enables the management of end-to-end partner lifecycle, systematic data collection, analysis using advanced statistical algorithms, deployment of artificial intelligence and machine learning algorithms, and continuous updates based on user feedback. The system includes modules for communication integration, consolidation, lifecycle management, data collection, data analysis, and artificial intelligence. The disclosed method and system enhance supply chain operations, generate actionable insights, and provide personalized user experiences, ultimately driving business growth and efficiency.

## Description

### CROSS REFERENCE TO RELATED APPLICATIONS

This application is a Continuation-in-Part (CIP) of application No. 18/341,714, entitled "Systems and Methods for Distribution Management Including Single Pane of Glass User Interface," filed on June 26, 2023, the disclosure of which is hereby incorporated by reference in its entirety into the present application.

### BACKGROUND

This invention relates to the aspects of a real-time data mesh method and system that encompass distribution, supply chain management, and related functionalities.

The traditional global distribution industry faces a multitude of challenges that encompass distribution management, supply chain management, inventory control, SKU management, compliance, and evolving consumer expectations. Traditionally, distribution and supply chain management, not being core competencies for many distributors, have been fraught with inefficiencies. Inventory control has long been a significant concern, with market fluctuations demanding flexible distribution and supply chain models. SKU management and localization have added layers of complexity due to divergent data from various OEMs and the requirements of differing jurisdictions. Compliance with international regulations has also demanded additional vigilance and paperwork. Finally, traditional customer interaction methods are quickly becoming outdated with the shift towards ecosystem commerce.

An ERP (Enterprise Resource Planning) system is a software system that integrates and manages various core business processes and functions within an organization. It serves as a centralized database and platform that allows different departments and functions, such as finance, human resources, procurement, inventory management, production, sales, and distribution, to share and access information in real-time. In complex distribution and distribution ecosystems, managing and optimizing the flow of goods, services, and information is crucial for businesses to remain competitive and meet customer demands. However, traditional systems often face numerous challenges that hinder efficiency, visibility, and decision-making capabilities. These challenges include data fragmentation, limited integration, data inconsistency, inefficient data processing, and data security concerns.

Data fragmentation is a prevalent issue in distribution and supply chain systems, where data is stored in various systems and departments, often legacy systems such as ERPs, leading to information silos. As a result, stakeholders struggle to access real-time and holistic insights into critical distribution and supply chain metrics, hindering their ability to make informed decisions and respond promptly to changing market dynamics. Additionally, data inconsistency arises when information is stored in different formats, making it challenging to maintain data integrity and ensure accurate analysis.

Furthermore, the lack of integration capabilities between disparate systems impedes the flow of data across the distribution and supply chain. Integrating data from multiple sources, including ERPs, legacy systems, and external providers, becomes a complex and time-consuming process. This limitation restricts the ability to gain a comprehensive view of the distribution and supply chain and hampers the optimization of operations. Moreover, inefficient data processing and analysis pose another significant challenge in distribution and supply chain management. Traditional systems often struggle to handle the volume, variety, and velocity of distribution and supply chain data. Extracting meaningful insights and actionable intelligence from this vast amount of data becomes a daunting task. The inability to efficiently process and analyze data hampers the identification of trends, forecasting, optimization, and decision-making.

Additionally, data security and governance concerns are critical factors in distribution and supply chain management. Distribution and supply chain data often contain sensitive information, including customer data, pricing details, and contractual agreements. Ensuring the security, privacy, and compliance of this data is paramount to protect against unauthorized access and breaches. Compliance with industry regulations and maintaining data integrity further complicate the data management landscape.

### BRIEF SUMMARY OF THE INVENTION

The global distribution industry is at a critical juncture, grappling with an array of challenges that span across multiple domains. These obstacles, which are both historical and emergent, necessitate the crafting of innovative and effective solutions to steer the sector towards growth and efficiency. Among these numerous hurdles, the most significant ones reside within the realms of distribution management, supply chain management, inventory and compliance issues, SKU (Stock Keeping Unit) management, the shift to direct-to-consumer models, and the rapidly evolving consumer expectations and behavior.

The first key challenge pertains to the management of the distribution process, a central part of the operations for any distributor. Yet, paradoxically, it's not typically within a distributor's core competencies. This gap creates inefficiencies in the system and compounds the difficulties in managing disruptions, which, in turn, has a direct bearing on a distributor's capacity to deliver products and services efficiently and on time. To add to these challenges, market trends are skewing towards a more direct-to-consumer model. The traditional distribution methodologies, which involved numerous intermediaries, are being gradually displaced. This evolving market dynamic necessitates a significant reassessment and reorientation of existing business models and strategies to ensure alignment with this new market reality.

A quintessential problem in the realm of distribution is inventory management. Considering the mercurial nature of market demands and trends, companies must ensure they maintain a flexible distribution and supply chain without necessarily holding positions in inventory. This makes the task of promising and delivering goods to customers substantially more complex and challenging. Besides, the sheer necessity of navigating through a myriad of compliance regulations for transporting goods and services across international borders adds an additional layer of complexity to the distribution process. This not only makes the distribution process more intricate and challenging but also imposes an extra layer of vigilance and paperwork to remain compliant.

To compound these challenges further, the issues surrounding the localization of products, varying distribution rights, and managing global SKUs also need to be addressed. The process of reconciling data from different Original Equipment Manufacturers (OEMs), each with its unique systems and processes, adds to the complexity. Furthermore, addressing the requirements of localization that are in line with laws and regulations of different jurisdictions adds to the inefficiencies and the potential for errors.

Finally, processes should be made more efficient and streamlined to ensure the sustainability of the distribution model in the evolving market landscape. This involves shifting the focus of the distribution platform from supply chain management to encompass subscription management, customer visibility, and other key distribution-oriented functionalities. The landscape of consumer behavior and expectations is rapidly changing. The shift towards ecosystem commerce necessitates the creation of a user-friendly, efficient, and configurable platform for purchasing technology. Traditional methods of customer interaction are quickly losing favor, making it indispensable for companies to evolve and cater to these new customer expectations.

Despite these challenges, the distribution model holds numerous advantages over the direct-to-consumer model. Firstly, it enables manufacturers to focus on their core competencies, leaving the complexities of logistics and distribution to specialized entities. Secondly, distribution networks often have extensive reach, allowing products to be available to customers in far-flung areas that may not be feasible for manufacturers to cover directly. Thirdly, distributors often offer value-added services such as after-sales support, installation, and training that enhance the overall customer experience.

However, for these benefits to materialize and for the distribution model to remain relevant and effective, it is imperative that it evolves and adapts to the emerging challenges. The current pain points need to be addressed, and processes should be made more efficient and streamlined to ensure the sustainability of the distribution model in the evolving market landscape. Systems and methodologies described herein are directed to addressing these challenges. Moreover, systems described herein can be configured to encompass features such as subscription management and other customer-centric areas that traditional distribution platforms have not effectively managed.

### Single Pane of Glass

The Single Pane of Glass (SPoG) can provide a comprehensive solution that aims to address these multifaceted challenges. It can be configured to provide a holistic, user-friendly, and efficient platform that streamlines the distribution process.

According to some embodiments, SPoG can be configured to address supply chain and distribution management by enhancing visibility and control over the supply chain process. Through real-time tracking and analytics, SPoG can deliver valuable insights into inventory levels and the status of goods, ensuring that the process of supply chain and distribution management is handled efficiently.

According to some embodiments, SPoG can integrate multiple touchpoints into a single platform to emulate a direct consumer channel into a distribution platform. This integration provides a unified direct channel for consumers to interact with distributors, significantly reducing the complexity of the supply chain and enhancing the overall customer experience.

SPoG offers an innovative solution for improved inventory management through advanced forecasting capabilities. These predictive analytics can highlight demand trends, guiding companies in managing their inventory more effectively and mitigating the risks of stockouts or overstocks.

According to some embodiments, SPoG can include a global compliance database. Updated in real-time, this database enables distributors to stay abreast with the latest international laws and regulations. This feature significantly reduces the burden of manual tracking, ensuring smooth and compliant cross-border transactions.

According to some embodiments, to streamline SKU management and product localization, SPoG integrates data from various OEMs into a single platform. This not only ensures data consistency but also significantly reduces the potential for errors. Furthermore, it provides capabilities to manage and distribute localized SKUs efficiently, thereby aligning with specific market needs and requirements.

According to some embodiments, SPoG is its highly configurable and user-friendly platform. Its intuitive interface allows users to easily access and purchase technology, thereby aligning with the expectations of the new generation of tech buyers.

Moreover, SPoG's advanced analytics capabilities offer invaluable insights that can drive strategy and decision-making. It can track and analyze trends in real-time, allowing companies to stay ahead of the curve and adapt to changing market conditions.

SPoG's flexibility and scalability make it a future-proof solution. It can adapt to changing business needs, allowing companies to expand or contract their operations as needed without significant infrastructural changes.

SPoG's innovative approach to resolving the challenges in the distribution industry makes it an invaluable tool. By enhancing supply chain visibility, streamlining inventory management, ensuring compliance, simplifying SKU management, and delivering a superior customer experience, it offers a comprehensive solution to the complex problems that have long plagued the distribution sector. Through its implementation, distributors can look forward to increased efficiency, reduced errors, and improved customer satisfaction, leading to sustained growth in the ever-evolving global market.

### Real-Time Data Mesh (RTDM)

The platform can be include implementation(s) of a Real-Time Data Mesh (RTDM), according to some embodiments. RTDS offers an innovative solution to address these challenges. RTDM, a distributed data architecture, enables real-time data availability across multiple sources and touchpoints. This feature enhances supply chain visibility, allowing for efficient management and enabling distributors to handle disruptions more effectively.

RTDM's predictive analytics capability offers a solution for efficient inventory control. By providing insights into demand trends, it aids companies in managing inventory, reducing risks of overstocking or stockouts.

RTDM's global compliance database, updated in real-time, ensures distributors are current with international regulations. It significantly reduces the manual tracking burden, enabling cross-border transactions.

The RTDM also simplifies SKU management and localization by integrating data from various OEMs, ensuring data consistency and reducing error potential. Its capabilities for managing and distributing localized SKUs align with specific market needs efficiently.

The RTDM enhances customer experience with its intuitive interface, allowing easy access and purchase of technology, meeting the expectations of the new generation of tech buyers.

### Advantages of SPoG and RTDM Integration

Integrating SPoG platform with the RTDM provides a myriad of advantages. Firstly, it offers a holistic solution to the longstanding problems in the distribution industry. With the RTDM's capabilities, SPoG can enhance supply chain visibility, streamline inventory management, ensure compliance, simplify SKU management, and deliver a superior customer experience.

The real-time tracking and analytics offered by RTDM improve SPoG's ability to manage the supply chain and inventory effectively. It provides accurate and up-to-date information, enabling distributors to make informed decisions quickly.

Integrating SPoG with RTDM also ensures data consistency and reduces errors in SKU management. By providing a centralized platform for managing data from various OEMs, it simplifies product localization and helps to align with market needs.

The global compliance database of RTDM, integrated with SPoG, facilitates and compliant cross-border transactions. It also reduces the burden of manual tracking, saving significant time and resources.

In some embodiments, a distribution platform incorporates SPoG and RTDM to provide an improved and comprehensive distribution system. The platform can leverage the advantages of a distribution model, addresses its existing challenges, and positions it for sustained growth in the ever-evolving global market.

### BRIEF DESCRIPTION OF THE DRAWINGS/FIGURES

FIG. 1 illustrates one embodiment of an operating environment of a distribution platform, referred to as System in this embodiment.
FIG. 2 illustrates one embodiment of an operating environment of the distribution platform, which builds upon the elements introduced in FIG. 1.
FIG. 3 illustrates one embodiment of a system for supply chain and distribution management.
FIG. 4 depicts an embodiment of an advanced distribution platform including System for managing a complex distribution network, which can be an embodiment of System, and provides a technology distribution platform for optimizing the management and operation of distribution networks.
FIG. 5 illustrates an RTDM module, according to an embodiment.
FIG. 6 illustrates a SPoG UI, according to an embodiment.
FIG. 7 illustrates an RTDM module, according to an embodiment.
FIG. 8 is a flow diagram of a method for vendor onboarding using the SPoG UI, according to some embodiments of the present disclosure.
FIG. 9 is a flow diagram of a method for reseller onboarding using the SPoG UI, according to some embodiments of the present disclosure.
FIG. 10 is a flow diagram of a method for customer and end customer onboarding using the SPoG UI, according to some embodiments of the present disclosure.
FIG. 11 is a block diagram of example components of device, according to some embodiments of the present disclosure.

### DETAILED DESCRIPTION OF THE INVENTION

Embodiments may be implemented in hardware, firmware, software, or any combination thereof. Embodiments may also be implemented as instructions stored on a machine-readable medium, which may be read and executed by one or more processors. A machine-readable medium may include any mechanism for storing or transmitting information in a form readable by a machine (e.g., a computing device). For example, a machine-readable medium may include read only memory (ROM); random access memory (RAM); magnetic disk storage media; optical storage media; flash memory devices, and others. Further, firmware, software, routines, instructions may be described herein as performing certain actions. However, it should be appreciated that such descriptions are merely for convenience and that such actions in fact result from computing devices, processors, controllers, or other devices executing the firmware, software, routines, instructions, etc.

It should be understood that the operations shown in the exemplary methods are not exhaustive and that other operations can be performed as well before, after, or between any of the illustrated operations. In some embodiments of the present disclosure, the operations can be performed in a different order and/or vary.

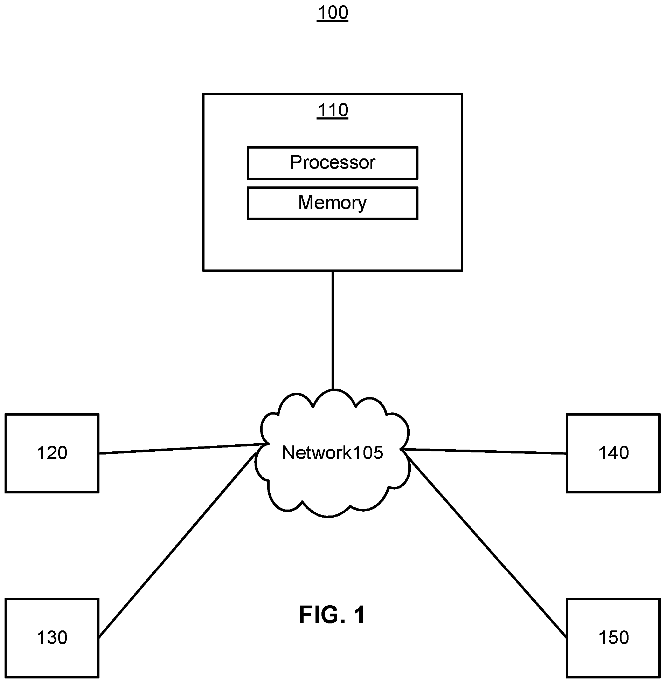

FIG. 1 illustrates an operating environment 100 of a distribution platform, referred to as System 110 in this embodiment. System 110 operates within the context of an information technology (IT) distribution model, catering to various stakeholders such as customers 120, end customers 130, vendors 140, resellers 150, and other entities involved in the distribution process. This operating environment encompasses a broad range of characteristics and dynamics that contribute to the success and efficiency of the distribution platform.

Customers 120 within the operating environment of System 110 represent businesses or individuals seeking IT solutions to meet their specific needs. These customers may require a diverse range of IT products such as hardware components, software applications, networking equipment, or cloud-based services. System 110 provides customers with a user-friendly interface, allowing them to browse, search, and select the most suitable IT solutions based on their requirements. Customers can also access real-time data and analytics through System 110, empowering them to make informed decisions and optimize their IT infrastructure.

End customers 130 are the ultimate beneficiaries of the IT solutions provided by System 110. They may include businesses or individuals who utilize IT products and services to enhance their operations, productivity, or daily activities. End customers rely on System 110 to access a wide array of IT solutions, ensuring they have access to the latest technologies and innovations in the market. System 110 enables end customers to track their orders, receive updates on delivery status, and access customer support services, thereby enhancing their overall experience.

Vendors 140 play a crucial role within the operating environment of System 110. These vendors encompass manufacturers, distributors, and suppliers who offer a diverse range of IT products and services. System 110 acts as a centralized platform for vendors to showcase their offerings, manage inventory, and facilitate transactions with customers and resellers. Vendors can leverage System 110 to streamline their supply chain operations, manage pricing and promotions, and gain insights into customer preferences and market trends. By integrating with System 110, vendors can expand their reach, access new markets, and enhance their overall visibility and competitiveness.

Resellers 150 are intermediaries within the distribution model who bridge the gap between vendors and customers. They play a vital role in the IT distribution ecosystem by connecting customers with the right IT solutions from various vendors. Resellers may include retailers, value-added resellers (VARs), system integrators, or managed service providers. System 110 enables resellers to access a comprehensive catalog of IT solutions, manage their sales pipeline, and provide value-added services to customers. By leveraging System 110, resellers can enhance their customer relationships, optimize their product offerings, and increase their revenue streams.

Within the operating environment of System 110, there are various dynamics and characteristics that contribute to its effectiveness. These dynamics include real-time data exchange, integration with existing enterprise systems, scalability, and flexibility. System 110 ensures that relevant data is exchanged in real-time between stakeholders, enabling accurate decision-making and timely actions. Integration with existing enterprise systems such as enterprise resource planning (ERP) systems, customer relationship management (CRM) systems, and warehouse management systems allows for communication and interoperability, eliminating data silos and enabling end-to-end visibility.

Scalability and flexibility are key characteristics of System 110. It can accommodate the growing demands of the IT distribution model, whether it involves an expanding customer base, an increasing number of vendors, or a wider range of IT products and services. System 110 is designed to handle large-scale data processing, storage, and analysis, ensuring that it can support the evolving needs of the distribution platform. Additionally, System 110 leverages a technology stack that includes .NET, Java, and other suitable technologies, providing a robust foundation for its operations.

In summary, the operating environment of System 110 within the IT distribution model encompasses customers 120, end customers 130, vendors 140, resellers 150, and other entities involved in the distribution process. System 110 serves as a centralized platform that facilitates efficient collaboration, communication, and transactional processes between these stakeholders. By leveraging real-time data exchange, integration, scalability, and flexibility, System 110 empowers stakeholders to optimize their operations, enhance customer experiences, and drive business success within the IT distribution ecosystem.

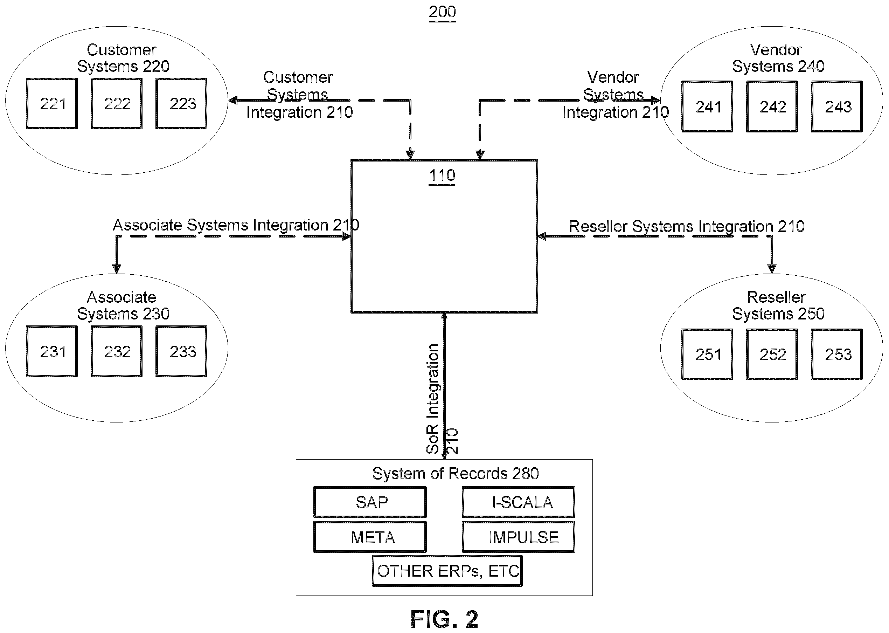

FIG. 2 illustrates an operating environment 200 of the distribution platform, which builds upon the elements introduced in FIG. 1. Within this operating environment, integration points 210 facilitate data flow and connectivity between various customer systems 220, vendor systems 240, reseller systems 260, and other entities involved in the distribution process. The diagram showcases the interconnectedness and the mechanisms that enable efficient collaboration and data-driven decision-making.

Operating environment 200 can include System 110 as a distribution platform that serves as the central hub for managing and facilitating the distribution process. System 110 can be configured to perform functions and operations as a bridge between customer systems 220, vendor systems 240, reseller systems 260, and other entities within the ecosystem. It can integrate communication, data exchange, and transactional processes, providing stakeholders with a unified and streamlined experience. Moreover, operating environment 200 can include one or more integration points 210 to ensure smooth data flow and connectivity. These integration points include:

Customer System Integration: Integration point 210 can enable System 110 to connect with customer systems 220, enabling efficient data exchange and synchronization. Customer systems 220 may include various entities such as customer system 221, customer system 222, and customer system 223. These systems represent the internal systems utilized by customers, such as enterprise resource planning (ERP) or customer relationship management (CRM) systems. Integration with customer systems 220 empowers customers to access real-time inventory information, pricing details, order tracking, and other relevant data, enhancing their visibility and decision-making capabilities.

Vendor System Integration: Integration point 210 facilitates the connection between System 110 and vendor systems 240. Vendor systems 240 may include entities such as vendor system 241, vendor system 242, and vendor system 243, representing the inventory management systems, pricing systems, and product catalogs employed by vendors. Integration with vendor systems 240 ensures that vendors can efficiently update their product offerings, manage pricing and promotions, and receive real-time order notifications and fulfillment details.

Reseller System Integration: Integration point 210 provides capabilities for reseller systems 260 to connect with System 110. Reseller systems 260 may encompass entities such as reseller system 261, reseller system 262, and reseller system 263, representing the sales systems, customer management systems, and service delivery platforms employed by resellers. Integration with reseller systems 260 empowers resellers to access up-to-date product information, manage customer accounts, track sales performance, and provide value-added services to their customers.

Other Entity System Integration: Integration point 210 also enables connectivity with other entities involved in the distribution process. These entities may include entities such as entity system 271, entity system 272, and entity system 273. Integration with these systems ensures communication and data exchange, facilitating collaboration and efficient distribution processes.

Integration points 210 within the operating environment 200 are facilitated through standardized protocols, APIs, and data connectors. These mechanisms ensure compatibility, interoperability, and secure data transfer between the distribution platform and the connected systems. System 110 employs industry-standard protocols, such as RESTful APIs, SOAP, or GraphQL, to establish communication channels and enable data exchange.

In some embodiments, System 110 can incorporates authentication and authorization mechanisms to ensure secure access and data protection. Technologies such as OAuth or JSON Web Tokens (JWT) can be employed to authenticate users, authorize data access, and maintain the integrity and confidentiality of the exchanged information.

In some embodiments, integration points 210 and data flow within the operating environment 200 enable stakeholders to operate within a connected ecosystem. Data generated at various stages of the distribution process, including customer orders, inventory updates, shipment details, and sales analytics, flows between customer systems 220, vendor systems 240, reseller systems 260, and other entities. This data exchange facilitates real-time visibility, enables data-driven decision-making, and enhances operational efficiency throughout the distribution platform.

In some embodiments, System 110 leverages advanced technologies such as Typescript, NodeJS, ReactJS, .NET Core, C#, and other suitable technologies to support the integration points 210 and enable communication within the operating environment 200. These technologies provide a robust foundation for System 110, ensuring scalability, flexibility, and efficient data processing capabilities. Moreover, the integration points 210 may also employ algorithms, data analytics, and machine learning techniques to derive valuable insights, optimize distribution processes, and personalize customer experiences. Integration points 210 and data flow within the operating environment 200 enable stakeholders to operate within a connected ecosystem. Data generated at various touchpoints, including customer orders, inventory updates, pricing changes, or delivery status, flows between the different entities, systems, and components. The integrated data is processed, harmonized, and made available in real-time to relevant stakeholders through System 110. This real-time access to accurate and up-to-date information empowers stakeholders to make informed decisions, optimize supply chain operations, and enhance customer experiences.

Several elements in the operating environment depicted in FIG. 2 can include conventional, well-known elements that are explained only briefly here. For example, each of the customer systems, such as customer systems 220, could include a desktop personal computer, workstation, laptop, PDA, cell phone, or any wireless access protocol (WAP) enabled device, or any other computing device capable of interfacing directly or indirectly with the Internet or other network connection. Each of the customer systems typically can run an HTTP client, such as Microsoft's Edge browser, Google's Chrome browser, Opera's browser, or a WAP-enabled browser for mobile devices, allowing customer systems to access, process, and view information, pages, and applications available from the distribution platform over the network.

Moreover, each of the customer systems can typically be equipped with user interface devices such as keyboards, mice, trackballs, touchpads, touch screens, pens, or similar devices for interacting with a graphical user interface (GUI) provided by the browser. These user interface devices enable users of customer systems to navigate the GUI, interact with pages, forms, and applications, and access data and applications hosted by the distribution platform.

The customer systems and their components can be operator-configurable using applications, including web browsers, which run on central processing units such as Intel Pentium processors or similar processors. Similarly, the distribution platform (System 110) and its components can be operator-configurable using applications that run on central processing units, such as the processor system, which may include Intel Pentium processors or similar processors, and/or multiple processor units.

Computer program product embodiments include machine-readable storage media containing instructions to program computers to perform the processes described herein. The computer code for operating and configuring the distribution platform and the customer systems, vendor systems, reseller systems, and other entities' systems to intercommunicate, process webpages, applications, and other data, can be downloaded and stored on hard disks or any other volatile or non-volatile memory medium or device, such as ROM, RAM, floppy disks, optical discs, DVDs, CDs, micro-drives, magneto-optical disks, magnetic or optical cards, nano-systems, or any suitable media for storing instructions and data.

Furthermore, the computer code for implementing the embodiments can be transmitted and downloaded from a software source over the Internet or any other conventional network connection using communication mediums and protocols such as TCP/IP, HTTP, HTTPS, Ethernet, etc. The code can also be transmitted over extranets, VPNs, LANs, or other networks, and executed on client systems, servers, or server systems using programming languages such as C, C++, HTML, Java, JavaScript, ActiveX, VBScript, and others.

It will be appreciated that the embodiments can be implemented in various programming languages executed on client systems, servers, or server systems, and the choice of language may depend on the specific requirements and environment of the distribution platform.

Thereby, operating environment 200 can couple a distribution platform with one or more integration points 210 and data flow to enable efficient collaboration and streamlined distribution processes.

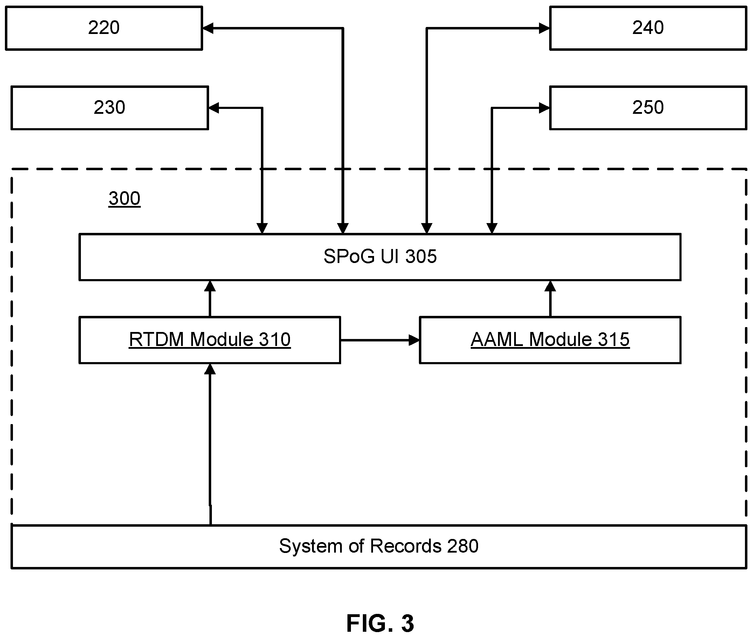

FIG. 3 illustrates a system 300 for supply chain and distribution management. System 300 (FIG. 3) is a supply chain and distribution management solution designed to address the challenges faced by fragmented distribution ecosystems in the global distribution industry. System 300 can include several interconnected components and modules that work in harmony to optimize supply chain and distribution operations, enhance collaboration, and drive business efficiency.

The Single Pane of Glass (SPoG) UI 305 serves as a centralized user interface, providing stakeholders with a unified view of the entire supply chain. It consolidates information from various sources and presents real-time data, analytics, and functionalities tailored to the specific roles and responsibilities of users. By offering a customizable and intuitive dashboard-style layout, the SPoG UI enables users to access relevant information and tools, empowering them to make data-driven decisions and efficiently manage their supply chain and distribution activities.

For example, a logistics manager can use the SPoG UI to monitor the status of shipments, track delivery routes, and view real-time inventory levels across multiple warehouses. They can visualize data through interactive charts and graphs, such as a map displaying the current location of each shipment or a bar chart showing inventory levels by product category. By having a unified view of the supply chain, the logistics manager can identify bottlenecks, optimize routes, and ensure timely delivery of goods.

The SPoG UI 305 integrates with other modules of System 300, facilitating real-time data exchange, synchronized operations, and streamlined workflows. Through API integrations, data synchronization mechanisms, and event-driven architectures, SPoG UI 305 ensures smooth information flow and enables collaborative decision-making across the distribution ecosystem.

For instance, when a purchase order is generated in the SPoG UI, the system automatically updates the inventory levels, triggers a notification to the warehouse management system, and initiates the shipping process. This integration enables efficient order fulfillment, reduces manual errors, and enhances overall supply chain visibility.

The Real-Time Data Mesh (RTDM) module 310 is another key component of System 300, responsible for ensuring the flow of data within the distribution ecosystem. It aggregates data from multiple sources, harmonizes it, and ensures its availability in real-time.

To illustrate the capabilities of the RTDM module, let's consider an example. In a distribution network, the RTDM module collects data from various systems, including inventory management systems, point-of-sale terminals, and customer relationship management systems. It harmonizes this data by aligning formats, standardizing units of measurement, and reconciling any discrepancies. The harmonized data is then made available in real-time, allowing stakeholders to access accurate and up-to-date information across the supply chain.

The RTDM module 310 can be configured to capture changes in data across multiple transactional systems in real-time. It employs a sophisticated Change Data Capture (CDC) mechanism that constantly monitors the transactional systems, detecting any updates or modifications. The CDC component is specifically designed to work with various transactional systems, including legacy ERP systems, Customer Relationship Management (CRM) systems, and other enterprise-wide systems, ensuring compatibility and flexibility for businesses operating in diverse environments.

By having access to real-time data, stakeholders can make timely decisions and respond quickly to changing market conditions. For example, if the RTDM module detects a sudden spike in demand for a particular product, it can trigger alerts to the production team, enabling them to adjust manufacturing schedules and prevent stockouts.

The RTDM module 310 facilitates data management within supply chain operations. It enables real-time harmonization of data from multiple sources, freeing vendors, resellers, customers, and end customers from constraints imposed by legacy ERP systems. This enhanced flexibility supports improved efficiency, customer service, and innovation.

Another component of System 300 is the Advanced Analytics and Machine Learning (AAML) module 315. Leveraging powerful analytics tools and algorithms such as Apache Spark, TensorFlow, or scikit-learn, the AAML module extracts valuable insights from the collected data. It enables advanced analytics, predictive modeling, anomaly detection, and other machine learning capabilities.

For instance, the AAML module can analyze historical sales data to identify seasonal patterns and predict future demand. It can generate forecasts that help optimize inventory levels, ensure stock availability during peak seasons, and minimize excess inventory costs. By leveraging machine learning algorithms, the AAML module automates repetitive tasks, predicts customer preferences, and optimizes supply chain processes.

In addition to demand forecasting, the AAML module can provide insights into customer behavior, enabling targeted marketing campaigns and personalized customer experiences. For example, by analyzing customer data, the module can identify cross-selling or upselling opportunities and recommend relevant products to individual customers.

Furthermore, the AAML module can analyze data from various sources, such as social media feeds, customer reviews, and market trends, to gain a deeper understanding of consumer sentiment and preferences. This information can be used to inform product development decisions, identify emerging market trends, and adapt business strategies to meet evolving consumer expectations.

System 300 emphasizes integration and interoperability to connect with existing enterprise systems such as ERP systems, warehouse management systems, and customer relationship management systems. By establishing connections and data flows between these systems, System 300 enables smooth data exchange, process automation, and end-to-end visibility across the supply chain. Integration protocols, APIs, and data connectors facilitate communication and interoperability among different modules and components, creating a holistic and connected distribution ecosystem.

The implementation and deployment of System 300 can be tailored to meet specific business needs. It can be deployed as a cloud-native solution using containerization technologies like Docker and orchestration frameworks like Kubernetes. This approach ensures scalability, easy management, and efficient updates across different environments. The implementation process involves configuring the system to align with specific supply chain requirements, integrating with existing systems, and customizing the modules and components based on the business's needs and preferences.

System 300 for supply chain and distribution management is a comprehensive and innovative solution that addresses the challenges faced by fragmented distribution ecosystems. It combines the power of the SPoG UI 305, the RTDM module 310, and the AAML module 315, along with integration with existing systems. By leveraging a diverse technology stack, scalable architecture, and robust integration capabilities, System 300 provides end-to-end visibility, data-driven decision-making, and optimized supply chain operations. The examples and options provided in this description are non-limiting and can be customized to meet specific industry requirements, driving efficiency and success in supply chain and distribution management.

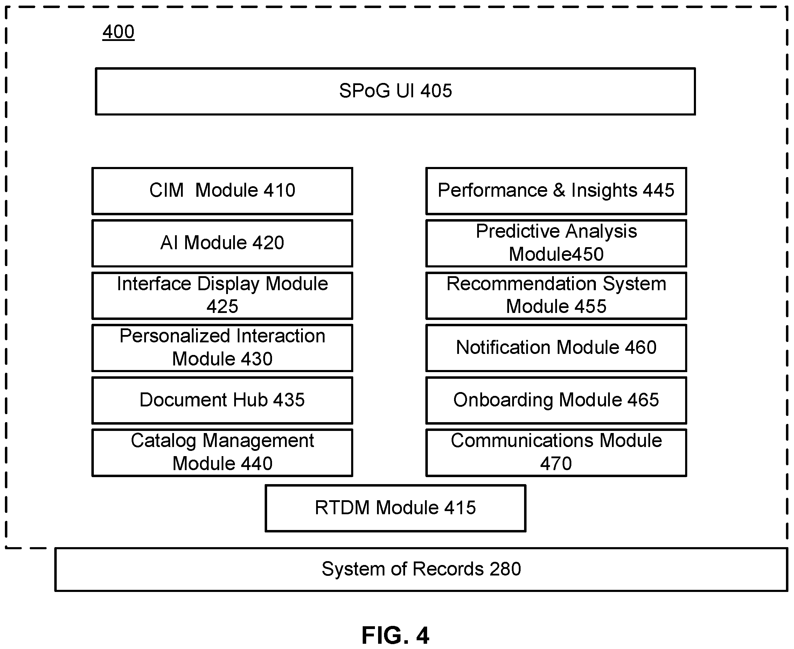

FIG. 4 depicts an embodiment of an advanced distribution platform including System 400 for managing a complex distribution network, which can be an embodiment of System 300, and provides a technology distribution platform for optimizing the management and operation of distribution networks. System 400 includes several interconnected modules, each serving specific functions and contributing to the overall efficiency of supply chain operations. In some embodiments, these modules can include SPoG UI 405, CIM 410, RTDM module 415, AI module 420, Interface Display Module 425, Personalized Interaction Module 430, Document Hub 435, Catalog Management Module 440, Performance and Insight Markers Display 445, Predictive Analytics Module 450, Recommendation System Module 455, Notification Module 460, Self-Onboarding Module 465, and Communication Module 470.

System 400, as an embodiment of System 300, leverages a range of technologies and algorithms to enable supply chain and distribution management. These technologies and algorithms facilitate efficient data processing, personalized interactions, real-time analytics, secure communication, and effective management of documents, catalogs, and performance metrics.

The SPoG UI 405, in some embodiments, serves as the central interface within System 400, providing stakeholders with a unified view of the entire distribution network. It utilizes frontend technologies such as ReactJS, TypeScript, and Node.js to create interactive and responsive user interfaces. These technologies enable the SPoG UI 405 to deliver a user-friendly experience, allowing stakeholders to access relevant information, navigate through different modules, and perform tasks efficiently.

The CIM 410, or Customer Interaction Module, employs algorithms and technologies such as Oracle Eloqua, Adobe Target, and Okta to manage customer relationships within the distribution network. These technologies enable the module to handle customer data securely, personalize customer experiences, and provide access control for stakeholders.

The RTDM module 415, or Real-Time Data Mesh module, is a critical component of System 400 that ensures the smooth flow of data across the distribution ecosystem. It utilizes technologies such as Apache Kafka, Apache Flink, or Apache Pulsar for data ingestion, processing, and stream management. These technologies enable the RTDM module 415 to handle real-time data streams, process large volumes of data, and ensure low-latency data processing. Additionally, the module employs Change Data Capture (CDC) mechanisms to capture real-time data updates from various transactional systems, such as legacy ERP systems and CRM systems. This capability allows stakeholders to access up-to-date and accurate information for informed decision-making.

The AI module 420 within System 400 leverages advanced analytics and machine learning algorithms, including Apache Spark, TensorFlow, and scikit-learn, to extract valuable insights from data. These algorithms enable the module to automate repetitive tasks, predict demand patterns, optimize inventory levels, and improve overall supply chain efficiency. For example, the AI module 420 can utilize predictive models to forecast demand, allowing stakeholders to optimize inventory management and minimize stockouts or overstock situations.

The Interface Display Module 425 focuses on presenting data and information in a clear and user-friendly manner. It utilizes technologies such as HTML, CSS, and JavaScript frameworks like ReactJS to create interactive and responsive user interfaces. These technologies allow stakeholders to visualize data using various data visualization techniques, such as graphs, charts, and tables, enabling efficient data comprehension, comparison, and trend analysis.

The Personalized Interaction Module 430 utilizes customer data, historical trends, and machine learning algorithms to generate personalized recommendations for products or services. It employs technologies like Adobe Target, Apache Spark, and TensorFlow for data analysis, modeling, and delivering targeted recommendations. For example, the module can analyze customer preferences and purchase history to provide personalized product recommendations, enhancing customer satisfaction and driving sales.

The Document Hub 435 serves as a centralized repository for storing and managing documents within System 400. It utilizes technologies like SeeBurger and Elastic Cloud for efficient document management, storage, and retrieval. For instance, the Document Hub 435 can employ SeeBurger's document management capabilities to categorize and organize documents based on their types, such as contracts, invoices, product specifications, or compliance documents, allowing stakeholders to easily access and retrieve relevant documents when needed.

The Catalog Management Module 440 enables the creation, management, and distribution of up-to-date product catalogs. It ensures that stakeholders have access to the latest product information, including specifications, pricing, availability, and promotions. Technologies like Kentico and Akamai are employed to facilitate catalog updates, content delivery, and caching. For example, the module can leverage Akamai's content delivery network (CDN) to deliver catalog information to stakeholders quickly and efficiently, regardless of their geographical location.

The Performance and Insight Markers Display 445 collects, analyzes, and visualizes real-time performance metrics and insights related to supply chain operations. It utilizes tools like Splunk and Datadog to enable effective performance monitoring and provide actionable insights. For instance, the module can utilize Splunk's log analysis capabilities to identify performance bottlenecks in the supply chain, enabling stakeholders to take proactive measures to optimize operations.

The Predictive Analytics Module 450 employs machine learning algorithms and predictive models to forecast demand patterns, optimize inventory levels, and enhance overall supply chain efficiency. It utilizes technologies such as Apache Spark and TensorFlow for data analysis, modeling, and prediction. For example, the module can utilize TensorFlow's deep learning capabilities to analyze historical sales data and predict future demand, allowing stakeholders to optimize inventory levels and minimize costs.

The Recommendation System Module 455 focuses on providing intelligent recommendations to stakeholders within the distribution network. It generates personalized recommendations for products or services based on customer data, historical trends, and machine learning algorithms. Technologies like Adobe Target and Apache Spark are employed for data analysis, modeling, and delivering targeted recommendations. For instance, the module can leverage Adobe Target's recommendation engine to analyze customer preferences and behavior, and deliver personalized product recommendations across various channels, enhancing customer engagement and driving sales.

The Notification Module 460 enables the distribution of real-time notifications to stakeholders regarding important events, updates, or alerts within the supply chain. It utilizes technologies like Apigee X and TIBCO for message queues, event-driven architectures, and notification delivery. For example, the module can utilize TIBCO's messaging infrastructure to send real-time notifications to stakeholders' devices, ensuring timely and relevant information dissemination.

The Self-Onboarding Module 465 facilitates the onboarding process for new stakeholders entering the distribution network. It provides guided steps, tutorials, or documentation to help users become familiar with the system and its functionalities. Technologies such as Okta and Kentico are employed to ensure secure user authentication, access control, and self-learning resources. For instance, the module can utilize Okta's identity and access management capabilities to securely onboard new stakeholders, providing them with appropriate access permissions and guiding them through the system's functionalities.

The Communication Module 470 enables communication and collaboration within System 400. It provides channels for stakeholders to interact, exchange messages, share documents, and collaborate on projects. Technologies like Apigee Edge and Adobe Launch are employed to facilitate secure and efficient communication, document sharing, and version control. For example, the module can utilize Apigee Edge's API management capabilities to ensure secure and reliable communication between stakeholders, enabling them to collaborate effectively.

Thereby, System 400 can incorporate various modules that utilize a diverse range of technologies and algorithms to optimize supply chain and distribution management. These modules, including SPoG UI 405, CIM 410, RTDM module 415, AI module 420, Interface Display Module 425, Personalized Interaction Module 430, Document Hub 435, Catalog Management Module 440, Performance and Insight Markers Display 445, Predictive Analytics Module 450, Recommendation System Module 455, Notification Module 460, Self-Onboarding Module 465, and Communication Module 470, work together to provide end-to-end visibility, data-driven decision-making, personalized interactions, real-time analytics, and streamlined communication within the distribution network. The incorporation of specific technologies and algorithms enables efficient data management, secure communication, personalized experiences, and effective performance monitoring, contributing to enhanced operational efficiency and success in supply chain and distribution management.

### REAL TIME DATA MESH

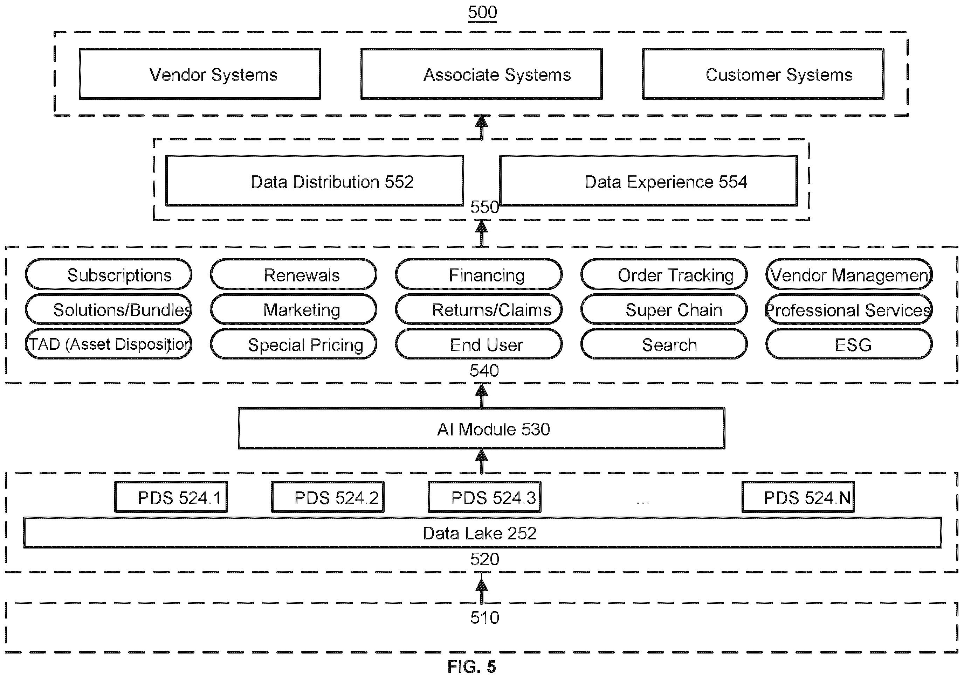

FIG. 5 illustrates RTDM module 500, according to an embodiment. RTDM module 500, which can be an embodiment of RTDM module 310, can include interconnected components, processes, and sub-systems configured to enable real-time data management and analysis.

The RTDM module 500, as depicted in FIG. 5, represents an effective data mesh and change capture component within the overall system architecture. The module is designed to provide real-time data management and harmonization capabilities, enabling efficient operations within the supply chain and distribution management domain.

RTDM module 500 can include an integration layer 510 (also referred to as a "system of records") that integrates with various enterprise systems. These enterprise systems can include ERPs such as SAP, Impulse, META, and I-SCALA, among others, and other data sources. Integration layer 510 can process data exchange and synchronization between RTDM module 500 and these systems. Data feeds are established to retrieve relevant information from the system of records, such as sales orders, purchase orders, inventory data, and customer information. These feeds enable real-time data updates and ensure that the RTDM module operates with the most current and accurate data.

RTDM module 500 can include data layer 520 configured to process and translate data for retrieval and analysis. At the core of the data layer is the data mesh, a cloud-based infrastructure designed to provide scalable and fault-tolerant data storage capabilities. Within the data mesh, multiple Purposive Datastores (PDS) are deployed to store specific types of data, such as customer data, product data, or inventory data. Each PDS is optimized for efficient data retrieval based on specific use cases and requirements. The PDSes are configured to store specific types of data, such as customer data, product data, finance data, and more. These PDS serve as repositories for harmonized and standardized data, ensuring data consistency and integrity across the system.

In some embodiments, RTDM module 500 implements a data replication mechanism to capture real-time changes from multiple data sources, including transactional systems like ERPs (e.g., SAP, Impulse, META, I-SCALA). The captured data is then processed and harmonized on-the-fly, transforming it into a standardized format suitable for analysis and integration. This process ensures that the data is readily available and up-to-date within the data mesh, facilitating real-time insights and decision-making.

More specifically, data layer 520 within the RTDM module 500 can be configured as a powerful and flexible foundation for managing and processing data within the distribution ecosystem. In some embodiments, data layer 520 can encompasses a highly scalable and robust data lake, which can be referred to as data lake 522, along with a set of purposive datastores (PDSes), which can be denoted as PDSes 524.1 to 524.N. These components work in harmony to ensure efficient data management, harmonization, and real-time availability.

At the core of data layer 520 lies the data lake, data lake 522, a state-of-the-art storage and processing infrastructure designed to handle the ever-increasing volume, variety, and velocity of data generated within the supply chain. Built upon a scalable distributed file system, such as Apache Hadoop Distributed File System (HDFS) or Amazon S3, the data lake provides a unified and scalable platform for storing both structured and unstructured data. Leveraging the elasticity and fault-tolerance of cloud-based storage, data lake 522 can accommodate the influx of data from diverse sources.

Associated with data lake 522, a population of purposive datastores, PDSes 524.1 to 524.N, can be employed. Each PDS 524 can function as a purpose-built repository optimized for storing and retrieving specific types of data relevant to the supply chain domain. In some non-limiting examples, PDS 524.1 may be dedicated to customer data, storing information such as customer profiles, preferences, and transaction history. PDS 524.2 may be focused on product data, encompassing details about SKU codes, descriptions, pricing, and inventory levels. These purposive datastores allow for efficient data retrieval, analysis, and processing, catering to the diverse needs of supply chain stakeholders.

To ensure real-time data synchronization, data layer 520 can be configured to employ one or more sophisticated change data capture (CDC) mechanisms. These CDC mechanisms are integrated with the transactional systems, such as legacy ERPs like SAP, Impulse, META, and I-SCALA, as well as other enterprise-wide systems. CDC constantly monitors these systems for any updates, modifications, or new transactions and captures them in real-time. By capturing these changes, data layer 520 ensures that the data within the data lake 522 and PDSes 524 remains up-to-date, providing stakeholders with real-time insights into the distribution ecosystem.

In some embodiments, data layer 520 can be implemented to facilitate integration with existing enterprise systems using one or more frameworks, such as .NET or Java, ensuring compatibility with a wide range of existing systems and providing flexibility for customization and extensibility. For example, data layer 520 can utilize the Java technology stack, including frameworks like Spring and Hibernate, to facilitate integration with a system of records having a population of diverse ERP systems and other enterprise-wide solutions. This can facilitate smooth data exchange, process automation, and end-to-end visibility across the supply chain.

In terms of data processing and analytics, data layer 520 leverages the capabilities of distributed computing frameworks, such as Apache Spark or Apache Flink in some non-limiting examples. These frameworks can enable parallel processing and distributed computing across large-scale datasets stored in the data lake and PDSes. By leveraging these frameworks, supply chain stakeholders can perform complex analytical tasks, apply machine learning algorithms, and derive valuable insights from the data. For instance, data layer 520 can leverage Apache Spark's machine learning libraries to develop predictive models for demand forecasting, optimize inventory levels, and identify potential supply chain risks.

In some embodiments, data layer 520 can incorporate robust data governance and security measures. Fine-grained access control mechanisms and authentication protocols ensure that only authorized users can access and modify the data within the data lake and PDSes. Data encryption techniques, both at rest and in transit, safeguard the sensitive supply chain information against unauthorized access. Additionally, data layer 520 can implement data lineage and audit trail mechanisms, allowing stakeholders to trace the origin and history of data, ensuring data integrity and compliance with regulatory requirements.

In some embodiments, data layer 520 can be deployed in a cloud-native environment, leveraging containerization technologies such as Docker and orchestration frameworks like Kubernetes. This approach ensures scalability, resilience, and efficient resource allocation. For example, data layer 520 can be deployed on cloud infrastructure provided by AWS, Azure, or Google Cloud, utilizing their managed services and scalable storage options. This allows for scaling of resources based on demand, minimizing operational overhead and providing an elastic infrastructure for managing supply chain data.

Data layer 520 of RTDM module 500 can incorporate a highly scalable data lake, data lake 522, along with purpose-built PDSes, PDSes 524.1 to 524.N, and employing sophisticated CDC mechanisms, data layer 520 ensures efficient data management, harmonization, and real-time availability. The integration of diverse technology stacks, such as .NET or Java, and distributed computing frameworks like Apache Spark, enables powerful data processing, advanced analytics, and machine learning capabilities. With robust data governance and security measures, data layer 520 ensures data integrity, confidentiality, and compliance. Through its scalable infrastructure and integration with existing systems, data layer 520 empowers supply chain stakeholders to make data-driven decisions, optimize operations, and drive business success in the dynamic and complex distribution environment.

RTDM module 500 can include an AI module 530 configured to implement one or more algorithms and machine learning models to analyze the stored data in data layer 520 and derive meaningful insights. In some non-limiting examples, AI module 530 can apply predictive analytics, anomaly detection, and optimization algorithms to identify patterns, trends, and potential risks within the supply chain. AI module 530 can continuously learns from new data inputs and adapts its models to provide accurate and up-to-date insights. AI module 530 can generate predictions, recommendations, and alerts and publish such insights to dedicated data feeds.

Data engine layer 540 comprises a set of interconnected systems responsible for data ingestion, processing, transformation, and integration. Data engine layer 540 of RTDM module 500 can include a collection of headless engines 540.1 to 540.N that operate autonomously. These engines represent distinct functionalities within the system and can include, for example, one or more recommendation engines, insights engines, and subscription management engines. Engines 540.1 to 540.N can leverage the harmonized data stored in the data mesh to deliver specific business logic and services. Each engine is designed to be pluggable, allowing for flexibility and future expansion of the module's capabilities. Exemplary engines are shorn in FIG. 5, which are not intended to be limiting. Any additional headless engine can be included in data engine layer 540 or in other exemplary layers of the disclosed system.

These systems can be configured to receive data from multiple sources, such as transactional systems, IoT devices, and external data providers. The data ingestion process involves extracting data from these sources and transforming it into a standardized format. Data processing algorithms are applied to cleanse, aggregate, and enrich the data, making it ready for further analysis and integration.

Further, to facilitate integration and access to RTDM module 500, a data distribution mechanism can be employed. Data distribution mechanism 545 can be configured to include one or more APIs to facilitate distribution of data from the data mesh and engines to various endpoints, including user interfaces, micro front-ends, and external systems.

Experience layer 550 focuses on delivering an intuitive and user-friendly interface for interacting with supply chain data. Experience layer 550 can include data visualization tools, interactive dashboards, and user-centric functionalities. Through this layer, users can retrieve and analyze real-time data related to various supply chain metrics such as inventory levels, sales performance, and customer demand. The user experience layer supports personalized data feeds, allowing users to customize their views and receive relevant updates based on their roles and responsibilities. Users can subscribe to specific data updates, such as inventory changes, pricing updates, or new SKU notifications, tailored to their preferences and roles.

Thereby, in some embodiments, RTDM module 500 for supply chain and distribution management can include an integration with a system of records and include one or more of a data layer with a data mesh and purposive datastores, an AI component, a data engine layer, and a user experience layer. These components work together to provide users with intuitive access to real-time supply chain data, efficient data processing and analysis, and integration with existing enterprise systems. The technical feeds and retrievals within the module ensure that users can retrieve relevant, up-to-date information and insights to make informed decisions and optimize supply chain operations. Accordingly, RTDM module 500 facilitates supply chain and distribution management by providing a scalable, real-time data management solution. Its innovative architecture allows for the rich integration of disparate data sources, efficient data harmonization, and advanced analytics capabilities. The module's ability to replicate and harmonize data from diverse ERPs, while maintaining auditable and repeatable transactions, provides a distinct advantage in enabling a unified view for vendors, resellers, customers, end customers, and other entities in a distribution system, including an IT distribution system.

### SINGLE PANE OF GLASS UI

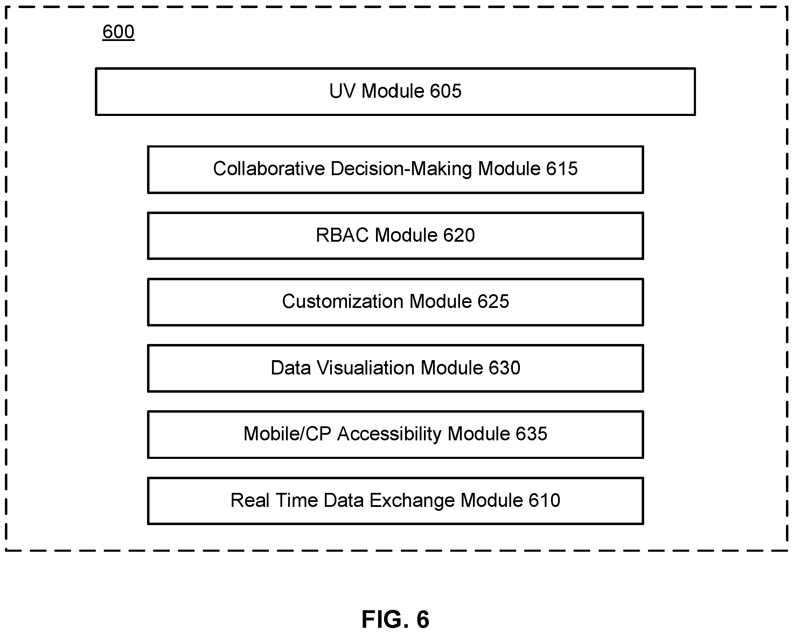

FIG. 6A illustrates SPoG UI, according to an embodiment. SPoG UI 600. In some embodiments, SPoG UI 600, which can be an embodiment of SPoG UI 305, represents a comprehensive and intuitive user interface designed to provide stakeholders with a unified and customizable view of the entire distribution ecosystem. It combines a range of features and functionalities that enable users to gain a comprehensive understanding of the supply chain and efficiently manage their operations.

SPoG UI 600 can include a Unified View (UV) Module 605, which provides stakeholders with a centralized and customizable dashboard-style layout. This module allows users to access real-time data, analytics, and functionalities tailored to their specific roles and responsibilities within the distribution ecosystem. The UV Module 605 serves as a single entry point for users, offering a holistic and comprehensive view of the supply chain operations and empowering them to make data-driven decisions.

SPoG UI 600 integrates with the Real-Time Data Exchange Module 610, to facilitate continuous exchange of data between SPoG UI 600 and RTDM 310, to leverage one or more data sources, which can include one or more ERPs, CRMs, or other sources. Through this module, stakeholders can access up-to-date, accurate, and harmonized data. Real-time data synchronization ensures that the information presented in SPoG UI 600 reflects the latest insights and developments across the supply chain. This integration enables stakeholders to make informed decisions based on accurate and synchronized data.

The Collaborative Decision-Making Module 615 within SPoG UI 600 fosters real-time collaboration and communication among stakeholders. This module enables the exchange of information, initiation of workflows, and sharing of insights and recommendations. By integrating with the RTDM module 310/500, the Collaborative Decision-Making Module 615 ensures that stakeholders can collaborate effectively based on accurate and synchronized data. This promotes overall operational efficiency and collaboration within the distribution ecosystem.

To ensure secure and controlled access to functionalities and data, SPoG UI 600 incorporates the Role-Based Access Control (RBAC) Module 620. Administrators can define roles, assign permissions, and control user access based on their responsibilities and organizational hierarchy. The RBAC Module 620 ensures that only authorized users can access specific features and information, safeguarding data privacy, security, and compliance within the distribution ecosystem.

The Customization Module 625 empowers users to personalize their dashboard and tailor the interface to their preferences and needs. Users can arrange widgets, charts, and data visualizations to prioritize the information most relevant to their specific roles and tasks. This module allows stakeholders to customize their view of the supply chain operations, providing a user-centric experience that enhances productivity and usability.

SPoG UI 600 incorporates a powerful Data Visualization Module 630, which enables stakeholders to analyze and interpret supply chain data through interactive dashboards, charts, graphs, and visual representations. Leveraging advanced visualization techniques, this module presents complex data in a clear and intuitive manner. Users can gain insights into key performance indicators (KPIs), trends, patterns, and anomalies, facilitating data-driven decision-making and strategic planning.

SPoG UI 600 can include Mobile and Cross-Platform Accessibility Module 635 to ensure accessibility across multiple devices and platforms. Stakeholders can access the interface from desktop computers, laptops, smartphones, and tablets, allowing them to stay connected and informed while on the go. This module optimizes the user experience for different screen sizes, resolutions, and operating systems, ensuring access to real-time data and functionalities across various devices.

By integrating these reference elements/modules within SPoG UI 600 and leveraging its integration capabilities with the RTDM module 310/500, stakeholders can benefit from a powerful and user-friendly interface for supply chain and distribution management. The Unified View (UV) Module 605 provides a customizable and holistic view of the supply chain and distribution environment, while the Real-Time Data Exchange Module 610 ensures accurate and up-to-date data synchronization. The Collaborative Decision-Making Module 615 promotes effective communication and collaboration, and the RBAC Module 620 ensures secure access control. The Customization Module 625, Data Visualization Module 630, and Mobile and Cross-Platform Accessibility Module 635 enhance the user experience, data analysis, and accessibility, respectively. Together, these modules enable stakeholders to make informed decisions, optimize supply chain operations, and drive business efficiency within the distribution ecosystem.

SPoG 600 can incorporate high-velocity data in data-rich environments. In contemporary data-rich environments, conventional UI designs frequently grapple with presenting a large amount of information in an understandable, efficient, and visually appealing manner. The challenge intensifies when data is dynamic, changing in real-time, and needs to be displayed effectively in single-pane environments that emphasize clean, white-space-oriented designs.

SPoG 605 UI can be configured to manage real-time data efficiently, maintaining a visually clean interface without compromising performance. This innovative approach includes a unique configuration of the UI structure, responsive data visualizations, real-time data handling methods, adaptive information architecture, and white space optimization.

SPoG 605 UI is structured around a grid-based layout system, leveraging CSS Grid and Flexbox technologies. This structure offers the flexibility to create a fluid layout with elements that adjust automatically to the available space and content. HTML5 and CSS3 serve as the foundational technologies for creating the UI, while JavaScript, specifically React.js, manages the dynamic aspects of the UI.

It should be understood that the operations shown in the exemplary methods are not exhaustive and that other operations can be performed as well before, after, or between any of the illustrated operations. In some embodiments of the present disclosure, the operations can be performed in a different order and/or vary.

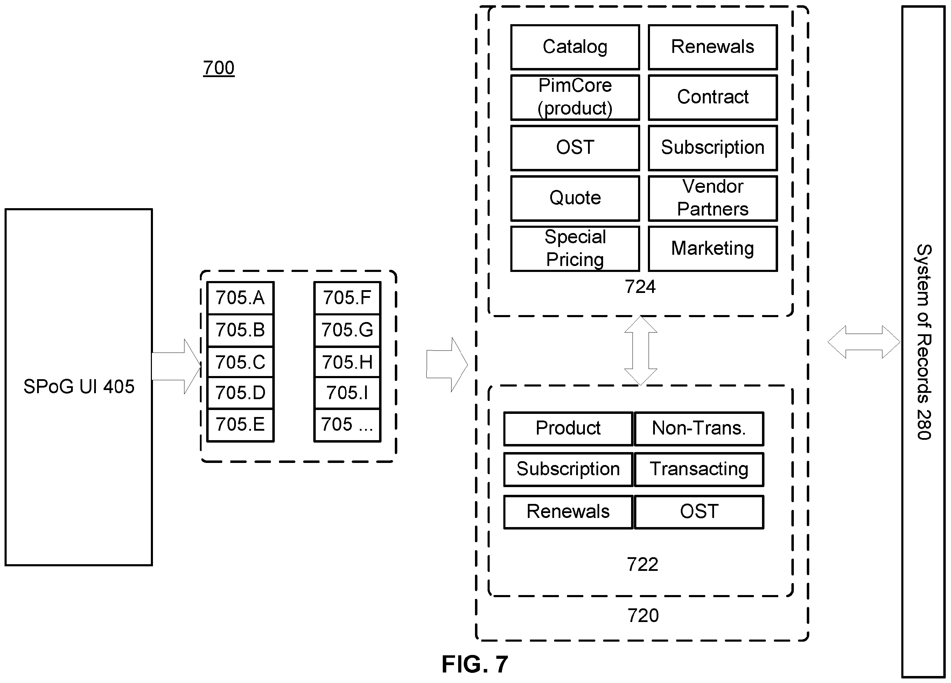

FIG. 7 illustrates RTDM 700, an embodiment of an ERP agnostic real-time data mesh with change data capture. In some embodiments, RTDM 700 can be operabliy connected to a UI, which can be an embodiment of SPoG UI 405 (as shown in FIG. 7) or another embodiment of an SPoG UI as described herein. RTDM 700 can include one or more headless engines 705, which can include one or more Onboarding Engine 705.A, Document Hub Engine 705.B, Connectivity Engine 705.C, Supply-Demand Engine 705.D, Customer Service Engine 705.E, Performance Engine 705.F, Business Planning Engine 705.G, Go-to-Market Engine 705.H, and Vendor Management Engine 705.I. In some embodiments, RTDM 700 can additionally comprise API Connectivity 710, Data Layer 720, which can include Global Data Lake 722, Data Governance Module 724, System of Records 725,

According to some embodiments, RTDM 700 is configured to perform processes related to Change Data Capture (CDC), in an ERP agnostic real-time data mesh. CDC mechanisms are implemented to capture real-time changes from multiple data sources, including transactional systems like ERPs. The captured data is then processed and harmonized on-the-fly, transforming it into a standardized format suitable for analysis and integration. This process ensures that the data within the data mesh remains up-to-date, enabling real-time insights and decision-making.

CDC can include one or more of the following steps:
Data Source Monitoring: CDC mechanisms continuously monitor the transactional systems, such as ERPs, legacy systems, and other enterprise-wide solutions, for any updates, modifications, or new transactions. This monitoring can be achieved through various techniques, such as log-based capturing, triggers, or polling mechanisms.

Change Detection: Once a change is detected in the data source, the CDC mechanism captures the specific changes made to the data. This can include insertions, updates, deletions, or other modifications.

Data Capture: The CDC mechanism captures the changed data in its raw format, preserving the original data structure and format. This ensures that the captured data can be transformed and integrated accurately.

Transformation and Harmonization: The captured raw data undergoes transformation and harmonization processes. This includes converting the data into a standardized format suitable for analysis and integration. Data cleansing, normalization, and enrichment techniques may be applied during this stage to ensure data quality and consistency.

Integration and Storage: The transformed and harmonized data is then integrated into the data mesh, specifically into the Global Data Lake and the relevant PDSes. The data is stored in a structured manner, making it easily accessible and available for real-time analysis and decision-making.

There are several approaches for CDC that can be utilized based on RTDM 700, depending on the data sources and requirements:

Log-based CDC: This approach leverages the transaction logs or change logs of the source systems to capture and extract the changes made to the data. Algorithms are employed to analyze and interpret the log files, identifying the specific changes and extracting the relevant data for further processing.

Trigger-based CDC: In this approach, triggers are set up on the source database tables to capture and track any changes made to the data. When a change occurs, the trigger is triggered, and the CDC mechanism captures the relevant data changes for further processing.

Polling-based CDC: In some cases, where real-time data capture is not feasible or necessary, polling mechanisms can be employed. The CDC mechanism periodically polls the source systems to check for any new or modified data. The data is then captured and processed based on the polling interval.

Such algorithms can be implemented using a combination of programming languages, database query languages, and data integration tools. Technologies such as Apache Kafka, Apache Nifi. In addition AI and/or ML models can be generated and trained to implement CDC in real-time data processing pipelines.

According to aspects of the disclosure, CDC ensures that the data within the ERP agnostic real-time data mesh is continuously updated and harmonized, enabling stakeholders to access real-time insights, make informed decisions, and optimize supply chain operations.

In some embodiments, headless engines 705 can be included in RTDM 700, each serving a specific function within the system:

In some embodiments, onboarding engine 705.A simplifies the process of onboarding new vendors into the distribution ecosystem. It handles tasks such as sign-up and account creation, vendor profiling, product evaluation, and contract execution. By streamlining the onboarding process, this engine ensures a integration experience, reducing friction and enhancing collaboration between vendors and the supply chain.

In some embodiments, document hub engine 705.B acts as a centralized repository for managing contracts and associated documents. It provides functionalities for the creation, storage, and retrieval of contracts, ensuring easy access and effective contract management. By centralizing contract-related information, the document hub engine enables stakeholders to maintain a comprehensive view of contractual agreements and associated documentation.

In some embodiments, connectivity engine 705.C facilitates communication and data exchange between various entities within the distribution ecosystem. It enables connectivity for catalog management, order status and tracking, and rich content delivery. Through standardized APIs and protocols, the connectivity engine ensures efficient and reliable data transmission, enhancing the overall connectivity and collaboration among stakeholders.

In some embodiments, supply-demand engine 705.D focuses on managing the supply chain dynamics, including order fulfillment, inventory visibility, and supply chain optimization. It provides real-time insights into supply and demand patterns, allowing stakeholders to make informed decisions and optimize their operations. The supply-demand engine acts as a central hub for supply chain visibility, ensuring timely order processing and efficient inventory management.

In some embodiments, customer service engine 705.E handles general issue resolution and customer support within the distribution ecosystem. It provides functionalities for managing customer inquiries, complaints, and returns. By streamlining customer service operations, this engine enhances customer satisfaction and strengthens customer relationships.

In some embodiments, performance engine 705.F focuses on monitoring and analyzing key performance metrics and business health indicators. It provides stakeholders with visibility into sales performance, pipeline visibility, and alerts and insights. The performance engine facilitates data-driven decision-making, allowing stakeholders to identify opportunities for improvement and optimize their business processes.

In some embodiments, business planning engine 705.G enables stakeholders to capture and track business objectives and goals. It provides functionalities for strategic planning, forecasting, and resource allocation. By aligning business objectives with operational strategies, the business planning engine supports effective decision-making and helps drive business success.

In some embodiments, go-to-market engine 705.H encompasses core marketing services within the distribution ecosystem. It facilitates the creation and distribution of marketing content, training resources, and sales enablement materials. The go-to-market engine supports product launches, marketing campaigns, and channel partner enablement, ensuring effective go-to-market strategies.

In some embodiments, vendor management engine 705.1 focuses on managing vendor relationships and associated activities. It handles contractual items, supply and demand management, customer service, and go-to-market initiatives related to vendors and partners. The vendor management engine ensures effective collaboration and coordination between the distribution ecosystem and its vendors and partners.

In some embodiments, API Connectivity layer 710 enables integration and communication between RTDM 700 and external systems, such as ERPs, legacy systems, and other enterprise-wide solutions. Through well-defined APIs, RTDM 700 can exchange data and interact with these systems, ensuring data consistency and real-time updates.

Data Layer 720 can be configured as a suite of interconnected systems and infrastructure designed to manage, process, and analyze supply chain data. It facilitates real-time data management, harmonization, and availability, enabling stakeholders to derive actionable insights and make informed decisions. In some embodiments, data layer 720 can include Global Data Lake 722 and Data Governance Module 724.

In some embodiments, Global Data Lake 722 is configured as a scalable and fault-tolerant storage infrastructure that serves as a central repository for supply chain data within RTDM 600. In a non-limiting example, Global Data Lake 722 can be formed as an implementation of cloud-based storage technologies, such as Apache Hadoop Distributed File System (HDFS) or Amazon S3, to accommodate the diverse data requirements of the distribution ecosystem. Within Global Data Lake 722, multiple Purposive Datastores (PDSes) can be configured and deployed. These PDSes are purpose-built repositories optimized for storing and retrieving specific types of data relevant to the supply chain domain. Each PDS within the Global Data Lake 722 serves as a dedicated storage entity for specific categories of data, such as customer data, product data, finance data, and more.

In some embodiments, Global Data Lake 722 serves as a scalable and fault-tolerant storage infrastructure within RTDM 700. It encompasses various purposive datastores (PDSes) optimized for efficient data retrieval and storage. These PDSes include product data, non-transacting data, transacting data, order status and tracking (OST) data, renewals data, subscription data, and more. The global data lake acts as a central repository for harmonized and standardized data, enabling real-time insights and analysis.

In some embodiments, PDSes offer several advantages within the Global Data Lake 722: Each PDS can be optimized for efficient data retrieval based on specific use cases and requirements. By organizing data into purpose-built datastores, the Global Data Lake 722 enables stakeholders to access relevant data quickly, facilitating real-time insights and decision-making. The PDSes within the Global Data Lake 722 can be enabled for harmonizing and standardizing data across the distribution ecosystem. By enforcing consistent data formats, structures, and semantics, the PDSes ensure data integrity and enable data integration across different systems and processes.

Global Data Lake 722, along with its PDSes, can be enabled to leverage cloud-based storage infrastructure, enabling scalability and elasticity. As the volume of supply chain data increases, the Global Data Lake 722 can scale to accommodate growing data requirements, ensuring that the system remains performant and responsive.

PDSes also allow for data segmentation based on specific data types, ensuring data privacy and confidentiality. By organizing data into dedicated PDSes, sensitive information can be segregated, and access controls can be applied to protect data privacy and comply with regulatory requirements.

In some embodiments, Data Governance Module 724 is configured to be operably connected to Global Data Lake 722 and the PDSes, and configured to ensure the integrity, security, and compliance of the data within RTDM 600. Data Governance Module 724 can establish policies, processes, and controls to govern data management activities within the distribution ecosystem.

In some embodiments, Data Governance Module 724 can implement robust data security measures, including access controls, authentication mechanisms, and encryption techniques, to protect the confidentiality and integrity of the supply chain data. It ensures that only authorized users have access to specific data, safeguarding against unauthorized data breaches. Data Governance Module 724 can also enforce data quality standards and implements data validation and cleansing processes. It ensures that the data stored in the Global Data Lake 722 and the PDSes is accurate, consistent, and reliable, enabling stakeholders to rely on high-quality data for decision-making and analysis.

Data Governance Module 724 can facilitate compliance with relevant regulations and industry standards governing data management within the supply chain domain. It establishes controls and processes to ensure data privacy, retention, and lawful use, mitigating the risk of non-compliance and associated penalties.

Data Governance Module 724 can incorporate data lineage and audit trail mechanisms, allowing stakeholders to trace the origin, history, and transformations applied to the data within the Global Data Lake 722 and the PDSes. This ensures data traceability, enhances data transparency, and supports compliance and audit requirements. In some embodiments, Data Governance Module 724 provides robust data governance and management capabilities within RTDM 700. It ensures data integrity, compliance with regulatory requirements, and data privacy and security. The data governance module incorporates fine-grained access controls, authentication protocols, data encryption techniques, and audit trail mechanisms to safeguard data and ensure accountability.

In some embodiments, Data Governance Module 724 can manage several functionalities are implemented to manage different types of data within the supply chain. These functionalities include:

Catalog Management: The Data Governance Module 724 facilitates the management of the transactional catalog data. It ensures that the catalog information, such as product details, pricing, and availability, is accurate, up-to-date, and consistent across the distribution ecosystem.

Pimcore - Product Data: This functionality within the Data Governance Module 724 focuses on managing product data using a Pimcore-based solution. It enables the creation, storage, and maintenance of product-related information, including descriptions, specifications, images, and other attributes. By centralizing product data management, the module ensures data consistency and accessibility across the supply chain.

Order Status and Tracking (OST): The Data Governance Module 724 incorporates features to track and manage the status of orders throughout the supply chain. It provides real-time visibility into the progress of orders, including order placement, fulfillment, and delivery. This functionality enhances transparency and enables stakeholders to monitor and address any issues related to order processing and delivery.

Quote Management: The module enables the management of quotes within the distribution ecosystem. It allows stakeholders to create, revise, and track quotes for products or services. The quote management functionality ensures efficient handling of quote-related information, facilitating streamlined quoting processes and accurate pricing.

Special Pricing Management: This functionality within the Data Governance Module 724 focuses on managing special pricing arrangements within the supply chain. It enables the maintenance and enforcement of special pricing agreements, such as bid pricing or contract-specific pricing. By ensuring consistent and accurate special pricing, the module supports pricing transparency and contractual compliance.

Renewals Management: The Data Governance Module 724 includes functionalities for managing renewals within the distribution ecosystem. It facilitates the tracking and management of service contract renewals, license contract renewals, and associated renewal schedules. The renewals management functionality ensures timely renewal notifications and accurate contract management.

Contract Management: This functionality within the Data Governance Module 724 enables the management and tracking of contracts within the distribution ecosystem. It provides a centralized repository for storing and accessing contract-related information, such as terms, conditions, and expiration dates. The contract management functionality ensures effective contract governance, compliance, and streamlined contract processes.

Subscription Management: The module incorporates features for managing subscriptions within the supply chain. It enables the tracking of subscription-based services, usage/metering information, and billing/payment details. The subscription management functionality ensures accurate subscription tracking, billing accuracy, and customer satisfaction.

Vendor Partner Management: This functionality focuses on managing vendor partnerships within the distribution ecosystem. It facilitates the maintenance of strategic partner information, partner program details, partner certification, and partner-level information. The vendor partner management functionality enhances collaboration and coordination with key vendors and partners, enabling mutually beneficial relationships.

Marketing Data Management: The Data Governance Module 724 includes functionalities to manage marketing-related data within the distribution ecosystem. It facilitates the storage, retrieval, and distribution of marketing content, such as marketing materials, training resources, and sales enablement assets. The marketing data management functionality ensures effective marketing operations, content sharing, and improved go-to-market strategies.

Data Governance Module 724 can accommodate additional or alternative other functionalities (not listed) withing its comprehensive set of functionalities to ensures data integrity, security, and compliance within the distribution ecosystem. By implementing fine-grained access controls, authentication mechanisms, and encryption techniques, it safeguards the confidentiality and integrity of the supply chain data. The module enforces data quality standards, implements validation processes, and ensures accurate and consistent data across different functionalities.

Additionally, Data Governance Module 724 supports compliance with regulatory requirements and industry standards governing data management within the supply chain domain. It establishes controls and processes to ensure data privacy, retention, and lawful use, mitigating the risk of non-compliance and associated penalties. The module also incorporates data lineage and audit trail mechanisms, enabling stakeholders to trace the origin, history, and transformations applied to the data.

System of Records 725 represents the integration layer within RTDM 700. It connects with various enterprise systems, including ERPs and other data sources, to enable data exchange and synchronization. The system of records retrieves relevant information such as sales orders, purchase orders, inventory data, and customer information, ensuring real-time data updates and accurate insights.

Data Layer 720, comprising the Global Data Lake 722 and the Data Governance Module 724 is central to RTDM 600. The Global Data Lake 722 provides scalable and fault-tolerant storage infrastructure, while the PDSes optimize data retrieval, harmonization, and integration. The Data Governance Module 724 ensures data integrity, security, and compliance, promoting sound data management practices within the distribution ecosystem. These components in combination empower the SPoG to leverage real-time data insights and drive efficient and informed decision-making within the dynamic and complex distribution environment.

Overall, RTDM 700 combines the enumerated elements, headless engines, API connectivity, the global data lake, the data governance module, and the system of records to provide a comprehensive and scalable real-time data management solution. It enables efficient supply chain operations, data harmonization, advanced analytics, and integration with existing enterprise systems. RTDM 700 empowers stakeholders with timely insights and actionable intelligence to optimize their supply chain processes and drive business success.

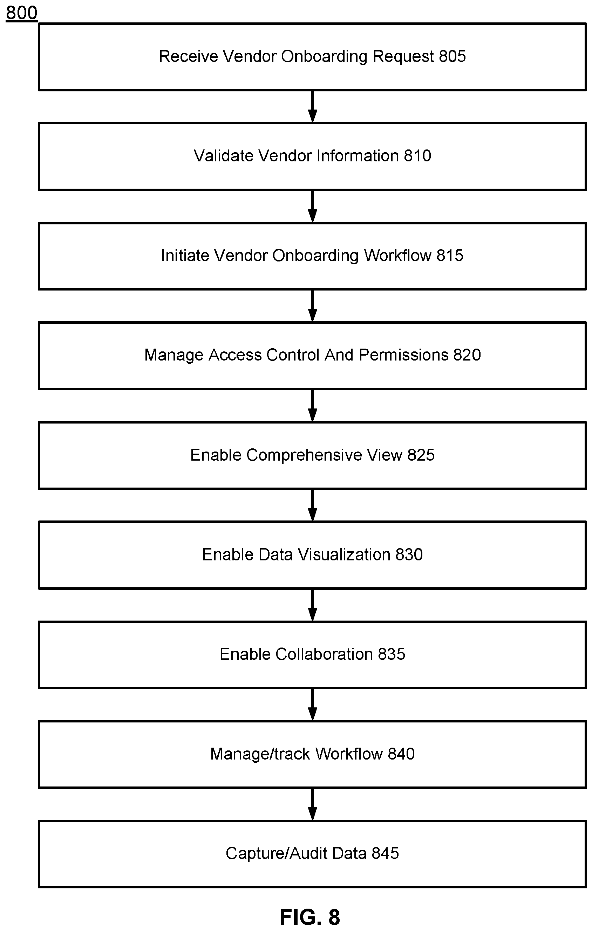

FIG. 8 is a flow diagram of a method 800 for vendor onboarding using the SPoG UI, according to some embodiments of the present disclosure. In some embodiments, method 800 outlines a streamlined and efficient process that leverages the capabilities of the SPoG UI to facilitate the onboarding of vendors into the distribution ecosystem. By integrating real-time data, collaborative decision-making, and role-based access control functionalities, the SPoG UI enables stakeholders to effectively manage and optimize the vendor onboarding process. Based on the disclosure herein, operations in method 800 can be performed in a different order and/or vary to suit specific implementation requirements.

At operation 805, the process is initiated when a vendor expresses interest in joining the distribution ecosystem. The computing device, utilizing the SPoG UI, receives the vendor's information and relevant details. This can include company profiles, contact information, product catalogs, certifications, and any other pertinent data required for the vendor onboarding process.

At operation 810, the computing device validates the vendor's information using integration capabilities with the Real-Time Data Exchange Module. By leveraging real-time data synchronization and access to external systems, the computing device ensures that the vendor's details are accurate and up-to-date. This validation step helps maintain data integrity, minimizes errors, and establishes a reliable foundation for the vendor onboarding process.

At operation 815, the computing device initiates the vendor onboarding workflow through the Collaborative Decision-Making Module. This module allows stakeholders involved in the onboarding process, such as procurement officers, legal teams, and vendor managers, to collaborate and make informed decisions based on the vendor's information. The SPoG UI facilitates communication, file sharing, and workflow initiation, enabling stakeholders to collectively assess the vendor's suitability and efficiently progress through the onboarding steps.

At operation 820, the computing device employs the Role-Based Access Control (RBAC) Module to manage access control and permissions throughout the vendor onboarding process. The RBAC Module ensures that stakeholders only have access to the specific information and functionalities necessary for their roles. This control mechanism protects sensitive data, maintains privacy, and aligns with regulatory requirements. Authorized stakeholders can securely review and contribute to the vendor onboarding process, fostering a transparent and compliant environment.

At operation 825, the computing device provides stakeholders with a comprehensive view of the vendor onboarding process through the SPoG UI's Unified View (UV) Module. This module presents an intuitive and customizable dashboard-style layout, consolidating relevant information, milestones, and tasks associated with the vendor onboarding process. Stakeholders can monitor progress, track documentation requirements, and access real-time updates to ensure efficient and timely completion of the onboarding tasks.

At operation 830, the computing device enables stakeholders to interact with the SPoG UI's Data Visualization Module, which provides dynamic visualizations and analytics related to the vendor onboarding process. Through interactive charts, graphs, and reports, stakeholders can assess key performance indicators, identify bottlenecks, and gain insights into the overall efficiency of the vendor onboarding process. This data-driven approach empowers stakeholders to make informed decisions, allocate resources effectively, and optimize the onboarding workflow.

At operation 835, the computing device facilitates collaboration among stakeholders involved in the vendor onboarding process through the Collaborative Decision-Making Module. This module enables real-time communication, document sharing, and workflow coordination, allowing stakeholders to streamline the onboarding process. By providing a centralized platform for discussion, feedback, and approvals, the SPoG UI promotes efficient collaboration and reduces delays in the vendor onboarding workflow.

At operation 840, the computing device ensures effective management and tracking of the vendor onboarding process using the SPoG UI's Workflow Management Module. This module enables stakeholders to define and manage the sequence of tasks, approvals, and reviews required for successful vendor onboarding. Workflow templates can be configured, allowing for standardization and repeatability in the onboarding process. Stakeholders can monitor the status of each task, track completion, and receive notifications to ensure timely progress.

At operation 845, the computing device captures and records the vendor onboarding activities within the SPoG UI's Audit Trail Module. This module maintains a detailed history of the onboarding process, including actions taken, documents reviewed, and decisions made. The audit trail enhances transparency, accountability, and compliance, providing stakeholders with a reliable record for future reference and potential audits.

At operation 850, the computing device concludes the vendor onboarding process within the SPoG UI. Once all necessary steps, reviews, and approvals are completed, the vendor is officially onboarded into the distribution ecosystem. The SPoG UI can provide stakeholders with a summary of the onboarding process, allowing them to verify the completion of all requirements and initiate further actions, such as contract signing, product listing, and collaboration.

In conclusion, method 800 depicted in FIG. 8 outlines a streamlined and efficient vendor onboarding process using the SPoG UI. By leveraging real-time data integration, collaborative decision-making, role-based access control, comprehensive visualization, and workflow management functionalities, the SPoG UI empowers stakeholders to successfully onboard vendors into the distribution ecosystem. This process ensures data accuracy, promotes transparency, enhances collaboration, and facilitates informed decision-making throughout the vendor onboarding workflow. The SPoG UI's intuitive interface, combined with its customizable features and notifications, streamlines the onboarding process, reduces manual effort, and optimizes vendor integration within the dynamic and complex distribution environment.

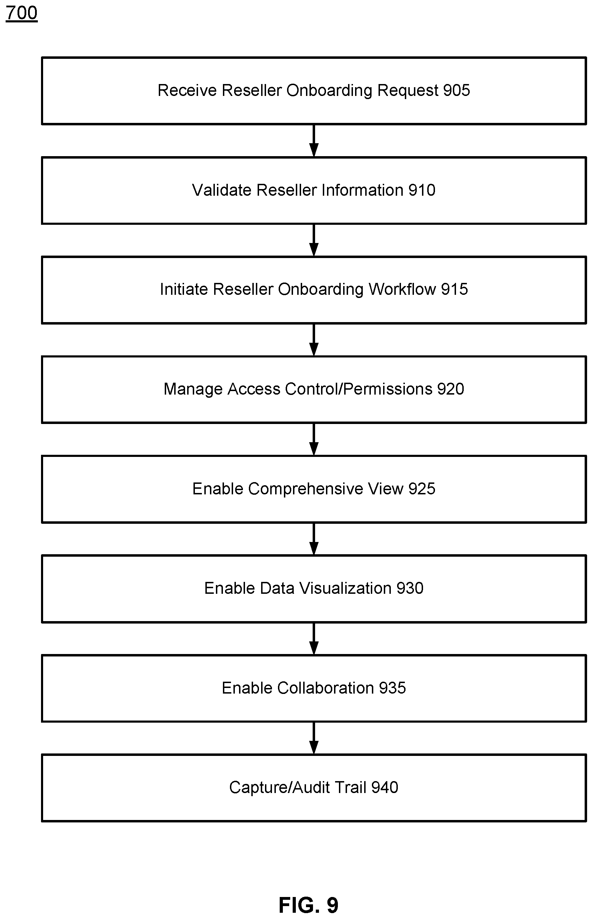

FIG. 9 is a flow diagram of a method 900 for reseller onboarding using the SPoG UI, according to some embodiments of the present disclosure. Method 900 outlines a streamlined and efficient process that leverages the capabilities of the SPoG UI to facilitate the onboarding of resellers into the distribution ecosystem. By integrating real-time data, collaborative decision-making, and role-based access control functionalities, the SPoG UI enables stakeholders to effectively manage and optimize the reseller onboarding process. Based on the disclosure herein, operations in method 900 can be performed in a different order and/or vary to suit specific implementation requirements.

At operation 905, the process begins when a reseller expresses interest in joining the distribution ecosystem. The computing device, utilizing the SPoG UI, receives the reseller's information and relevant details. This includes company profiles, contact information, business certifications, reseller agreements, and any other pertinent data required for the reseller onboarding process.

At operation 910, the computing device validates the reseller's information using integration capabilities with the Real-Time Data Exchange Module. By leveraging real-time data synchronization and access to external systems, the computing device ensures that the reseller's details are accurate and up-to-date. This validation step helps maintain data integrity, minimizes errors, and establishes a reliable foundation for the reseller onboarding process.

At operation 915, the computing device initiates the reseller onboarding workflow through the Collaborative Decision-Making Module. This module allows stakeholders involved in the onboarding process, such as sales representatives, legal teams, and account managers, to collaborate and make informed decisions based on the reseller's information. The SPoG UI facilitates communication, file sharing, and workflow initiation, enabling stakeholders to collectively assess the reseller's suitability and efficiently progress through the onboarding steps.

At operation 920, the computing device employs the Role-Based Access Control (RBAC) Module to manage access control and permissions throughout the reseller onboarding process. The RBAC Module ensures that stakeholders only have access to the specific information and functionalities necessary for their roles. This control mechanism protects sensitive data, maintains privacy, and aligns with regulatory requirements. Authorized stakeholders can securely review and contribute to the reseller onboarding process, fostering a transparent and compliant environment.

At operation 925, the computing device provides stakeholders with a comprehensive view of the reseller onboarding process through the SPoG UI's Unified View (UV) Module. This module presents an intuitive and customizable dashboard-style layout, consolidating relevant information, milestones, and tasks associated with the reseller onboarding process. Stakeholders can monitor progress, track documentation requirements, and access real-time updates to ensure efficient and timely completion of the onboarding tasks.

At operation 930, the computing device enables stakeholders to interact with the SPoG UI's Data Visualization Module, which provides dynamic visualizations and analytics related to the reseller onboarding process. Through interactive charts, graphs, and reports, stakeholders can assess key performance indicators, identify bottlenecks, and gain insights into the overall efficiency of the onboarding process. This data-driven approach empowers stakeholders to make informed decisions, allocate resources effectively, and optimize the reseller onboarding workflow.

At operation 935, the computing device facilitates collaboration among stakeholders involved in the reseller onboarding process through the Collaborative Decision-Making Module. This module enables real-time communication, document sharing, and workflow coordination, allowing stakeholders to streamline the onboarding process. By providing a centralized platform for discussion, feedback, and approvals, the SPoG UI promotes efficient collaboration and reduces delays in the reseller onboarding workflow.

At operation 940, the computing device records and maintains an audit trail of the reseller onboarding activities within the SPoG UI's Audit Trail Module. This module captures detailed information about actions taken, decisions made, and documents reviewed during the onboarding process. The audit trail enhances transparency, accountability, and compliance, serving as a valuable reference for future audits, reviews, and assessments.

At operation 945, the computing device concludes the reseller onboarding process within the SPoG UI. Once all necessary tasks, reviews, and approvals are completed, the reseller is officially onboarded into the distribution ecosystem. The SPoG UI provides stakeholders with a summary of the onboarding process, ensuring that all requirements are met and facilitating further actions, such as contract signing, product listing, and collaboration with the reseller.

In conclusion, method 900 depicted in FIG. 9 highlights the streamlined and efficient reseller onboarding process using the SPoG UI. By leveraging real-time data integration, collaborative decision-making, role-based access control, comprehensive visualization, and audit trail functionalities, the SPoG UI empowers stakeholders to successfully onboard resellers into the distribution ecosystem. The intuitive interface, customizable features, and robust collaboration capabilities of the SPoG UI streamline the onboarding process, enhance transparency, and foster efficient communication among stakeholders. The SPoG UI's data visualization capabilities facilitate data-driven decision-making, while the audit trail ensures compliance and provides a reliable record of the onboarding activities. Through the effective utilization of the SPoG UI, the reseller onboarding process becomes a well-orchestrated workflow, optimizing the integration of resellers and promoting business success within the dynamic distribution environment.

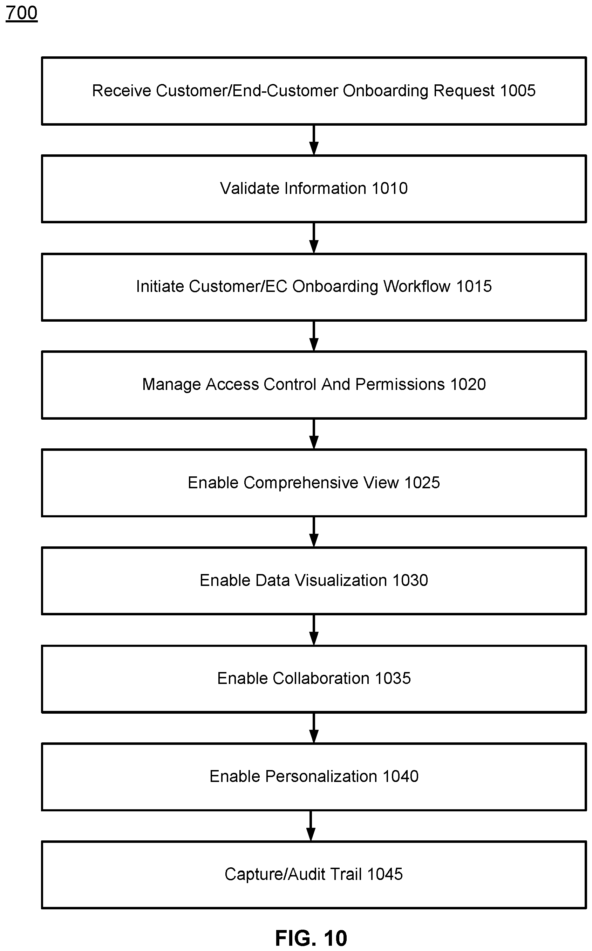

FIG. 10 is a flow diagram of a method 1000 for customer and end customer onboarding using the SPoG UI, according to some embodiments of the present disclosure. Method 1000 outlines a comprehensive and user-centric approach to efficiently onboard customers and end customers into the distribution ecosystem. By leveraging the capabilities of the SPoG UI, including real-time data integration, collaborative decision-making, and personalized user experiences, stakeholders can successfully onboard and engage customers, providing them with a and tailored onboarding experience. Based on the disclosure herein, operations in method 1000 can be performed in a different order and/or vary to suit specific implementation requirements.

At operation 1005, the process begins when a potential customer or end customer expresses interest in joining the distribution ecosystem. The computing device, utilizing the SPoG UI, captures the customer's or end customer's information, preferences, and requirements necessary for the onboarding process. This includes contact details, business profiles, industry-specific preferences, and any other relevant data.

At operation 1010, the computing device validates the customer's or end customer's information using real-time data integration capabilities with external systems. By synchronizing and accessing data from various sources, such as customer relationship management (CRM) systems or other enterprise-wide solutions, the computing device ensures the accuracy and completeness of the customer's or end customer's information. This validation step helps establish a reliable foundation for the onboarding process and enhances data integrity.

At operation 1015, the computing device initiates the customer or end customer onboarding workflow through the Collaborative Decision-Making Module. This module facilitates communication and collaboration among stakeholders involved in the onboarding process, such as sales representatives, account managers, and customer support teams. The SPoG UI provides a centralized platform for stakeholders to collectively assess customer requirements, define personalized onboarding journeys, and make informed decisions throughout the onboarding process.

At operation 1020, the computing device utilizes the Role-Based Access Control (RBAC) Module to manage access control and permissions during the onboarding process. The RBAC Module ensures that stakeholders have appropriate access to customer or end customer data based on their roles and responsibilities. This control mechanism protects sensitive information, maintains data privacy, and aligns with regulatory requirements. Authorized stakeholders can securely review, update, and track the onboarding progress, fostering a transparent and compliant onboarding environment.

At operation 1025, the computing device leverages the SPoG UI's Unified View (UV) Module to provide stakeholders with a comprehensive and customizable dashboard-style layout of the customer or end customer onboarding process. This module consolidates relevant information, tasks, and milestones associated with the onboarding journey, offering stakeholders a holistic view of the onboarding progress. Stakeholders can monitor the status, review documentation, and access real-time updates to ensure an efficient and onboarding experience.

At operation 1030, the computing device utilizes the SPoG UI's Data Visualization Module to present dynamic visualizations and analytics related to the onboarding process. Through interactive charts, graphs, and reports, stakeholders gain insights into key onboarding metrics, customer engagement levels, and potential bottlenecks. The data-driven approach empowers stakeholders to make informed decisions, optimize onboarding strategies, and personalize the onboarding experience for each customer or end customer.

At operation 1035, the computing device enables stakeholders to interact with the Collaborative Decision-Making Module to facilitate collaboration during the onboarding process. Stakeholders can share documents, initiate workflows, and exchange information in real-time. The SPoG UI fosters effective communication, reducing delays and ensuring alignment among stakeholders involved in customer or end customer onboarding.

At operation 1040, the computing device employs the Customization Module to allow stakeholders to personalize the onboarding experience for each customer or end customer. Stakeholders can tailor the interface, workflows, and communications to align with the customer's or end customer's preferences, industry-specific requirements, and strategic objectives. The customization capability enhances customer satisfaction and engagement during the onboarding journey.

At operation 1045, the computing device utilizes the Audit Trail Module within the SPoG UI to maintain a detailed record of the customer or end customer onboarding activities. This module captures information about actions taken, decisions made, and documents reviewed throughout the onboarding process. The audit trail enhances transparency, accountability, and compliance, serving as a valuable reference for future audits, reviews, and assessments.

At operation 1050, the computing device concludes the customer or end customer onboarding process within the SPoG UI. Once all necessary tasks, reviews, and approvals are completed, the customer or end customer is officially onboarded into the distribution ecosystem. The SPoG UI provides stakeholders with a summary of the onboarding process, ensuring that all requirements are met and facilitating further actions, such as account activation, provisioning of services, or personalized customer engagement.

In conclusion, method 1000 depicted in FIG. 10 illustrates the customer and end customer onboarding process facilitated by the SPoG UI. By leveraging real-time data integration, collaborative decision-making, role-based access control, comprehensive visualization, customization, and audit trail functionalities, the SPoG UI empowers stakeholders to successfully onboard customers and end customers into the distribution ecosystem. The intuitive interface, personalized features, and robust collaboration capabilities of the SPoG UI streamline the onboarding process, enhance transparency, and foster efficient communication among stakeholders. The SPoG UI's data visualization capabilities facilitate data-driven decision-making, while the customization and audit trail modules ensure a tailored and compliant onboarding experience. Through the effective utilization of the SPoG UI, the customer and end customer onboarding processes become workflows, optimizing the integration of customers and end customers and promoting business success within the dynamic distribution environment.

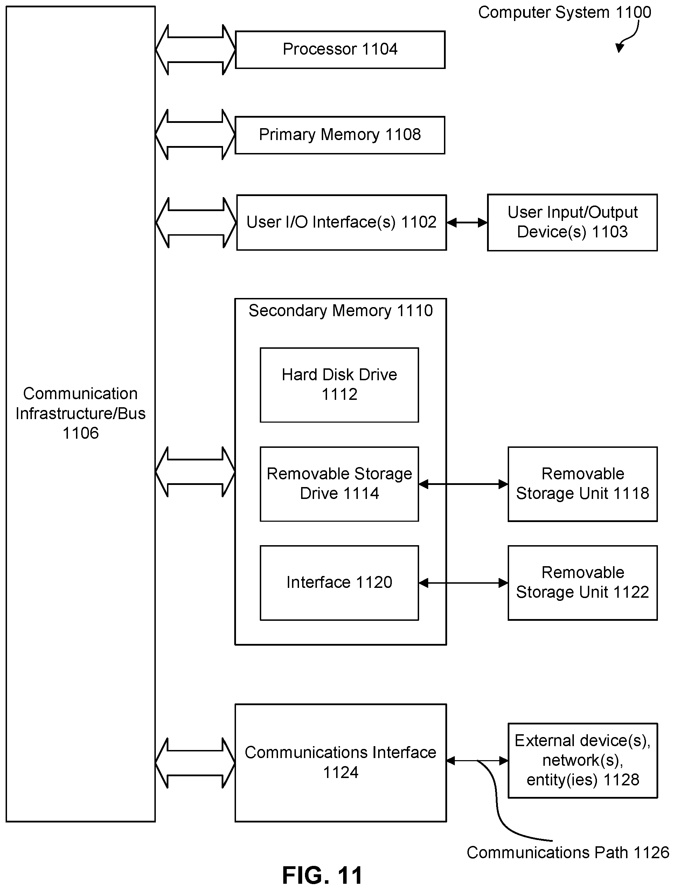

FIG. 11 is a block diagram of example components of device 1100. One or more computer systems 1100 may be used, for example, to implement any of the embodiments discussed herein, as well as combinations and sub-combinations thereof. Computer system 1100 may include one or more processors (also called central processing units, or CPUs), such as a processor 1104. Processor 1104 may be connected to a communication infrastructure or bus 1106.

Computer system 1100 may also include user input/output device(s) 1103, such as monitors, keyboards, pointing devices, etc., which may communicate with communication infrastructure 1106 through user input/output interface(s) 1102.

One or more processors 1104 may be a graphics processing unit (GPU). In an embodiment, a GPU may be a processor that is a specialized electronic circuit designed to process mathematically intensive applications. The GPU may have a parallel structure that is efficient for parallel processing of large blocks of data, such as mathematically intensive data common to computer graphics applications, images, videos, etc.

Computer system 1100 may also include a main or primary memory 1108, such as random access memory (RAM). Main memory 1108 may include one or more levels of cache. Main memory 1108 may have stored therein control logic (i.e., computer software) and/or data.

Computer system 1100 may also include one or more secondary storage devices or memory 1110. Secondary memory 1110 may include, for example, a hard disk drive 1112 and/or a removable storage device or drive 1114.

Removable storage drive 1114 may interact with a removable storage unit 1118. Removable storage unit 1118 may include a computer-usable or readable storage device having stored thereon computer software (control logic) and/or data. Removable storage unit 1118 may be program cartridge and cartridge interface (such as that found in video game devices), a removable memory chip (such as an EPROM or PROM) and associated socket, a memory stick and USB port, a memory card and associated memory card slot, and/or any other removable storage unit and associated interface. Removable storage drive 1114 may read from and/or write to removable storage unit 1118.

Secondary memory 1110 may include other means, devices, components, instrumentalities or other approaches for allowing computer programs and/or other instructions and/or data to be accessed by computer system 1100. Such means, devices, components, instrumentalities or other approaches may include, for example, a removable storage unit 1122 and an interface 1120. Examples of the removable storage unit 1122 and the interface 1120 may include a program cartridge and cartridge interface (such as that found in video game devices), a removable memory chip (such as an EPROM or PROM) and associated socket, a memory stick and USB port, a memory card and associated memory card slot, and/or any other removable storage unit and associated interface.

Computer system 1100 may further include a communication or network interface 1124. Communication interface 1124 may enable computer system 1100 to communicate and interact with any combination of external devices, external networks, external entities, etc. (individually and collectively referenced by reference number 1128). For example, communication interface 1124 may allow computer system 1100 to communicate with external or remote devices 1128 over communications path 1126, which may be wired and/or wireless (or a combination thereof), and which may include any combination of LANs, WANs, the Internet, etc. Control logic and/or data may be transmitted to and from computer system 1100 via communication path 1126.

Computer system 1100 may also be any of a personal digital assistant (PDA), desktop workstation, laptop or notebook computer, netbook, tablet, smartphone, smartwatch or other wearables, appliance, part of the Internet-of-Things, and/or embedded system, to name a few non-limiting examples, or any combination thereof.

Computer system 1100 may be a client or server, accessing or hosting any applications and/or data through any delivery paradigm, including but not limited to remote or distributed cloud computing solutions; local or on-premises software ("on-premise" cloud-based solutions); "as a service" models (e.g., content as a service (CaaS), digital content as a service (DCaaS), software as a service (SaaS), managed software as a service (MSaaS), platform as a service (PaaS), desktop as a service (DaaS), framework as a service (FaaS), backend as a service (BaaS), mobile backend as a service (MBaaS), infrastructure as a service (IaaS), etc.); and/or a hybrid model including any combination of the foregoing examples or other services or delivery paradigms.

Any applicable data structures, file formats, and schemas in computer system 1100 may be derived from standards including but not limited to JavaScript Object Notation (JSON), Extensible Markup Language (XML), Yet Another Markup Language (YAML), Extensible Hypertext Markup Language (XHTML), Wireless Markup Language (WML), MessagePack, XML User Interface Language (XUL), or any other functionally similar representations alone or in combination. Alternatively, proprietary data structures, formats or schemas may be used, either exclusively or in combination with known or open standards.

In some embodiments, a tangible, non-transitory apparatus or article of manufacture comprising a tangible, non-transitory computer useable or readable medium having control logic (software) stored thereon may also be referred to herein as a computer program product or program storage device. This includes, but is not limited to, computer system 1100, main memory 1108, secondary memory 1110, and removable storage units 1118 and 1122, as well as tangible articles of manufacture embodying any combination of the foregoing. Such control logic, when executed by one or more data processing devices (such as computer system 1100), may cause such data processing devices to operate as described herein.

It is to be appreciated that the Detailed Description section, and not the Summary and Abstract sections, is intended to be used to interpret the claims. The Summary and Abstract sections may set forth one or more but not all exemplary embodiments of the present invention as contemplated by the inventor(s), and thus, are not intended to limit the present invention and the appended claims in any way.

The present invention has been described above with the aid of functional building blocks illustrating the implementation of specified functions and relationships thereof. The boundaries of these functional building blocks have been arbitrarily defined herein for the convenience of the description. Alternate boundaries can be defined so long as the specified functions and relationships thereof are appropriately performed.

The foregoing description of the specific embodiments will so fully reveal the general nature of the invention that others can, by applying knowledge within the skill of the art, readily modify and/or adapt for various applications such specific embodiments, without undue experimentation, without departing from the general concept of the present invention. Therefore, such adaptations and modifications are intended to be within the meaning and range of equivalents of the disclosed embodiments, based on the teaching and guidance presented herein. It is to be understood that the phraseology or terminology herein is for the purpose of description and not of limitation, such that the terminology or phraseology of the present specification is to be interpreted by the skilled artisan in light of the teachings and guidance.

The breadth and scope of the present invention should not be limited by any of the above-described exemplary embodiments, but should be defined only in accordance with the following claims and their equivalents.

## Claims

1. A computerized method for change data capture in an ERP agnostic real-time data mesh, comprising:
monitoring transactional systems, including ERPs, for real-time changes.
capturing and processing the changed data using change data capture mechanisms.
transforming and harmonizing the captured data into a standardized format that is compatible with analysis and integration processes, ensuring data consistency and compatibility across the data mesh.
integrating the transformed and harmonized data into the data layer of the real-time data mesh, which includes a Global Data Lake comprising one or more Purposive Datastores (PDSes), to enable real-time analysis and decision-making based on up-to-date data within the data mesh.

2. The method of Claim 1, wherein the transformation and harmonization of the captured data involve data cleansing, normalization, and enrichment techniques to ensure data quality and consistency.

3. The method of claim 1, wherein the data layer includes the Global Data Lake configured as a scalable and fault-tolerant storage infrastructure, providing a central repository for the captured and transformed data within the real-time data mesh.

4. The method of claim 1, further comprising implementing change data capture using one or more trigger-based, machine-learning and/or polling-based CDC algorithms.

5. The method of claim 1, wherein the data layer comprises the Purposive Datastores (PDSes) optimized for efficient retrieval and storage of specific types of data.

6. The method of claim 1, further comprising storing the transformed and harmonized data in a cloud-based storage infrastructure.

7. The method of claim 1, further comprising applying artificial intelligence and/or machine learning models to enhance the change data capture process, facilitating automated analysis, and decision-making within the real-time data mesh.

8. A system for change data capture in an ERP agnostic real-time data mesh, comprising:
one or more computers to monitor transactional systems, including ERPs, for real-time changes, the computerized systems, the one or more computers comprising:
one or more headless engines;
a data layer of a real-time data mesh operably connected to the one or more headless engines, the data layer comprising a Global Data Lake comprising one or more Purposive Datastores (PDSes), to enable real-time analysis based on real time data within the data mesh, wherein the one or more computers are configured to capture and process the changed data using change data capture mechanisms, and wherein the Global Data Lake is configured to transform and harmonize the captured data into a standardized format that is compatible with analysis and integration processes, ensuring data consistency and compatibility across the data mesh.

9. The system of claim 8 further comprising a Data Governance Module for ensuring data integrity, security, and compliance within the real-time data mesh.

10. The system of claim 8, wherein the Headless engines are connected to the data layer through API Connectivity, enabling integration and communication between the components.

11. The system of claim 8, wherein the System of Records integrates with external enterprise systems, including ERPs, for data exchange and synchronization

12. The system of claim 8, wherein the Data Governance Module includes functionalities for catalog management, Pimcore-based product data management, order status and tracking (OST) management, special pricing management, and quote management.

13. The system of Claim 8, wherein the data layer comprises the Purposive Datastores (PDSes) optimized for efficient retrieval and storage of specific types of data relevant to the supply chain domain.

14. The system of Claim 8, further comprising a cloud-based storage infrastructure for storing the transformed and harmonized data.

15. The system of Claim 8, further comprising artificial intelligence and/or machine learning models used to enhance the change data capture process, enabling automated analysis and decision-making within the real-time data mesh.

16. A computer-readable medium comprising instructions that, when executed by a processor, perform the steps of:
monitoring transactional systems, including ERPs, for real-time changes.
capturing and processing the changed data using change data capture mechanisms.
transforming and harmonizing the captured data into a standardized format suitable for analysis and integration.
integrating the transformed and harmonized data into a data layer of a real-time data mesh for real-time analysis and decision-making.

17. The computer-readable medium of claim 16, further comprising instructions for implementing change data capture using one or more trigger-based, machine-learning and/or polling-based CDC algorithms.

18. The computer-readable medium of claim 16, wherein the data layer comprises Purposive Datastores (PDSes) optimized for efficient retrieval and storage of specific types of data.

19. The computer-readable medium of claim 16, wherein the instructions further comprise storing the transformed and harmonized data in a cloud-based storage infrastructure.

20. The computer-readable medium of claim 16, wherein the instructions further comprise applying artificial intelligence and/or machine learning models to enhance the change data capture process, facilitating automated analysis, and decision-making within the real-time data mesh.
